# EUROPEAN PATENT SPECIFICATION

(11) **EP 3 632 041 B1**
(45) Date of publication and mention of the grant of the patent: **08.12.2021**
(21) Application number: 18731283.0
(22) Date of filing: 24.05.2018
(51) Int. Cl.: H04L 12/24

(54) **INTENT SPECIFICATION CHECKS FOR INCONSISTENCIES**
ABSICHTSSPEZIFIKATIONSPRÜFUNGEN AUF INKONSISTENZEN
VÉRIFICATIONS DE SPÉCIFICATION D'INTENTION POUR DES INCOHÉRENCES

(30) Priority: 31.05.2017 US 201762513059 P; 28.07.2017 US 201715663642
(43) Date of publication of application: 08.04.2020
(73) Proprietor: Cisco Technology, Inc., San Jose, CA 95134 (US)
(72) Inventor: MOHANRAM, Kartik, San Jose, CA 95134 (US); NAGARAJAN, Chandra, San Jose, CA 95134 (US); DIXIT, Advait, San Jose, CA 95134 (US); KOMPELLA, Ramana, Rao, San Jose, CA 95134 (US)
(74) Representative: Mathys & Squire
(86) International application number: PCT/US2018/034309
(87) International publication number: WO 2018/222485

(56) References cited:
- EP-A2- 3 067 836
- WO-A1-2016/072996
- Cisco: "The Cisco Application POlicy Infrastructure Controller", , 31 July 2014 (2014-07-31), pages 1-19, XP002783501, Retrieved from the Internet: URL:https://www.cisco.com/c/en/us/solution s/collateral/data-center-virtualization/un ified-fabric/white-paper-c11-730021.pdf [retrieved on 2018-07-31]

## Description

### TECHNICAL FIELD

The present technology pertains to network configuration and troubleshooting, and more specifically to assurance of network configurations by checking intent specifications for inconsistencies.

### BACKGROUND

Computer networks are becoming increasingly complex, often involving low level as well as high level configurations at various layers of the network. For example, computer networks generally include numerous access policies, forwarding policies, routing policies, security policies, quality-of-service (QoS) policies, etc., which together define the overall behavior and operation of the network. Network operators have a wide array of configuration options for tailoring the network to the needs of the users. While the different configuration options available provide network operators a great degree of flexibility and control over the network, they also add to the complexity of the network. In many cases, the configuration process can become highly complex. Not surprisingly, the network configuration process is increasingly error prone. In addition, troubleshooting errors in a highly complex network can be extremely difficult. The process of identifying the root cause of undesired behavior in the network can be a daunting task.

A system for generating a composite network policy graph based on multiple network policy graphs and detecting conflicts between policies is described in WO 2016/072996. EP 3067836 discloses a reasoning engine that performs machine reasoning over network data (extracted from an operational network) in a network knowledge base to make inferences suitable for controlling and managing the network.

The invention is defined by the independent claims. Particular embodiments are defined by the subject-matter of the dependent claims. Embodiments which do not fall within the scope of the claims are to be interpreted merely as examples useful for understanding the invention.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings in which:
FIGs. 1A and IB illustrate example network environments;
FIG. 2A illustrates an example object model for a network;
FIG. 2B illustrates an example object model for a tenant object in the example object model from FIG. 2A;
FIG. 2C illustrates an example association of various objects in the example object model from FIG. 2A;
FIG. 2D illustrates a schematic diagram of example models for implementing the example object model from FIG. 2A;
FIG. 3A illustrates an example network assurance appliance;
FIG. 3B illustrates an example system for network assurance;
FIG. 3C illustrates a schematic diagram of an example static policy analyzer;
FIG. 4 illustrates an example scenario for intent specification checks;
FIG. 5A illustrates an example method for network assurance;
FIG. 5B illustrates an example method for checking an intent specification in a network;
FIG. 6 illustrates an example policy analysis system;
FIG. 7 illustrates an example computing device in accordance with various embodiments; and
FIG. 8 illustrates an example network device in accordance with various embodiments.

### DETAILED DESCRIPTION

Various embodiments of the disclosure are discussed in detail below. While specific implementations are discussed, it should be understood that this is done for illustration purposes only. A person skilled in the relevant art will recognize that other components and configurations may be used. Thus, the following description and drawings are illustrative and are not to be construed as limiting.
Numerous specific details are described to provide a thorough understanding of the disclosure. However, in certain instances, well-known or conventional details are not described in order to avoid obscuring the description. References to one or an embodiment in the present disclosure can be references to the same embodiment or any embodiment; and, such references mean at least one of the embodiments.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only, and is not intended to further limit the scope and meaning of the disclosure or of any example term. Likewise, the disclosure is not limited to various embodiments given in this specification.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

### OVERVIEW

Aspects of the invention are set out in the independent claims and preferred features are set out in the dependent claims. Features of one aspect may be applied to each aspect alone or in combination with other aspects.

Disclosed herein are systems, methods, and computer-readable media for checking an intent specification in a software-defined network (SDN). In some examples, a system or method can obtain, from one or more controllers in the SDN network, a logical model of the SDN network. The logical model can include configurations of one or more objects in a hierarchical management information tree (MIT) that defines manageable objects and object properties for the SDN network. In some cases, the one or more controllers can be application policy infrastructure controllers (APICs) in an application-centric infrastructure (APIC), and the hierarchical MIT can be an ACI management information model (MIM). Thus, the manageable objects can be managed objects (MOs) defined in the ACI MIM, and the configurations are user-entered configurations via the one or more APICs.

The system or method can perform, based on the hierarchical MIT, a syntactic verification of the configurations in the logical model to yield a syntactic verification output. The system or method can also perform, based on one or more rules defined for the manageable objects and object properties in the hierarchical MIT, a semantic verification of the configurations in the logical model to yield a semantic verification output. Based on the syntactic verification output and the semantic verification output, the system or method can determine whether the configurations in the logical model contain one or more errors.

### EXAMPLE EMBODIMENTS

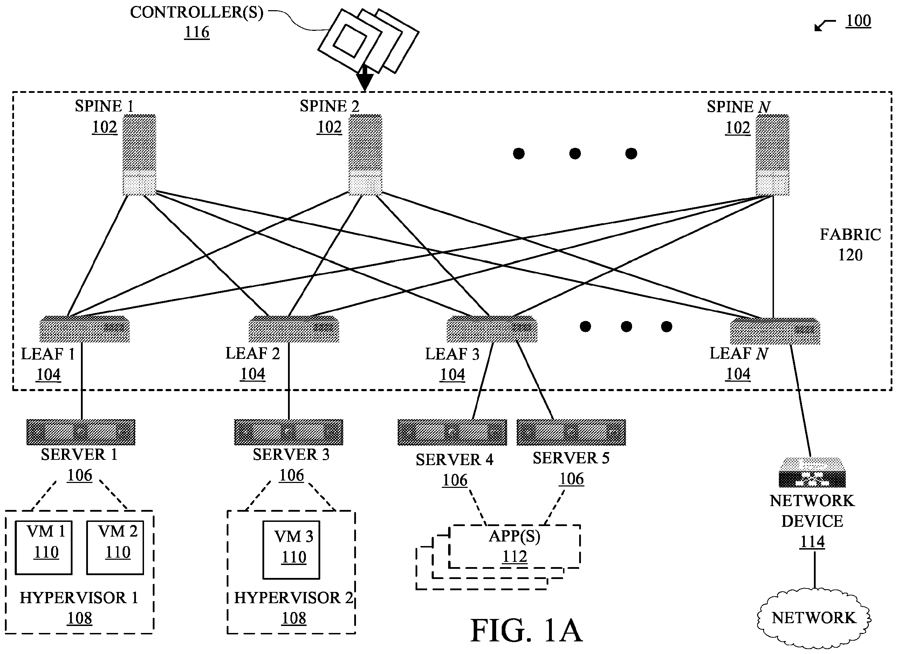

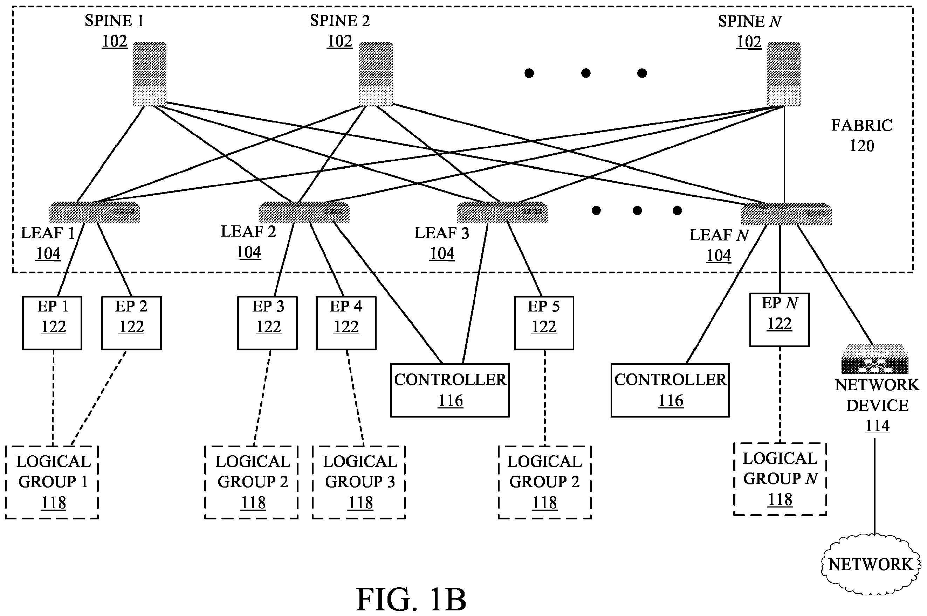

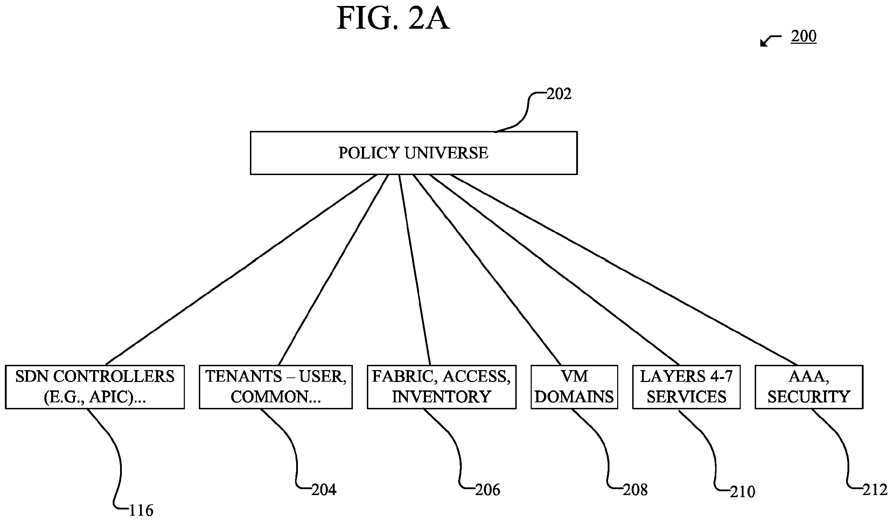

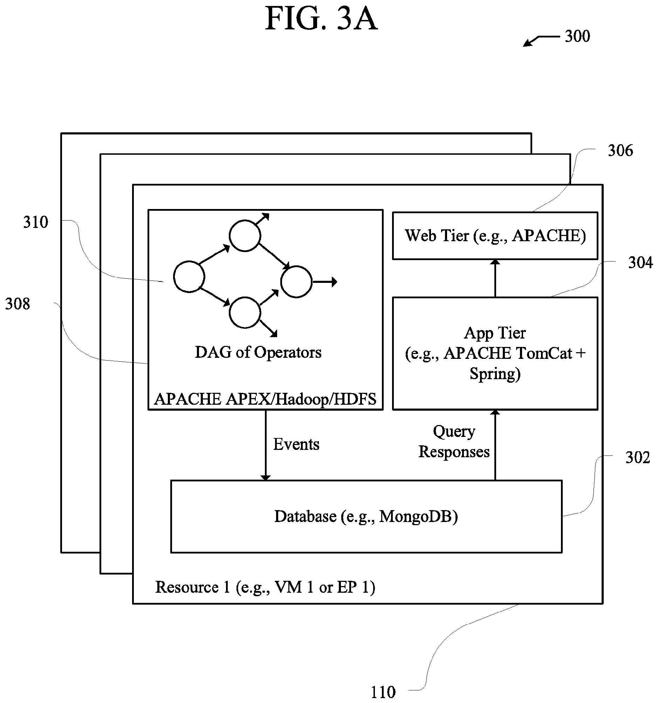

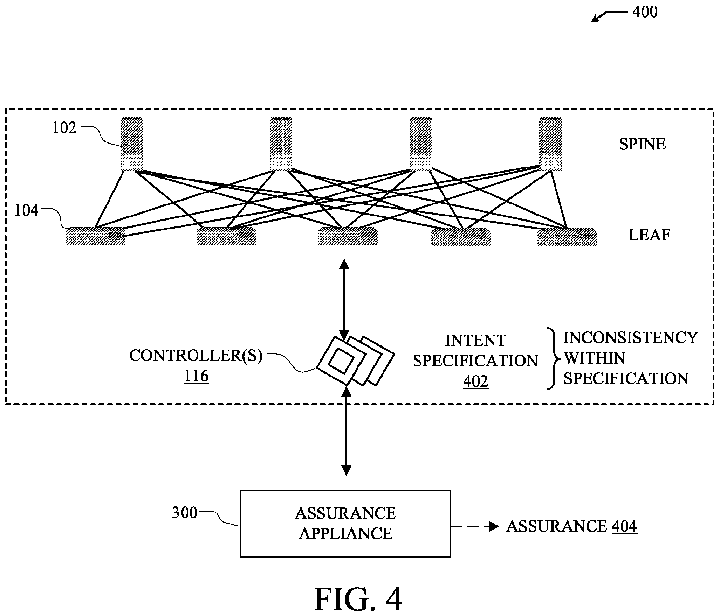

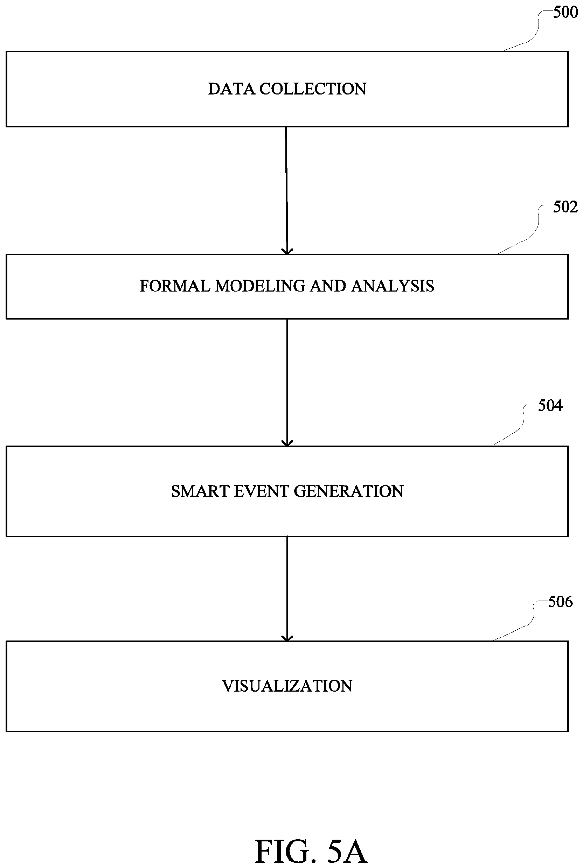

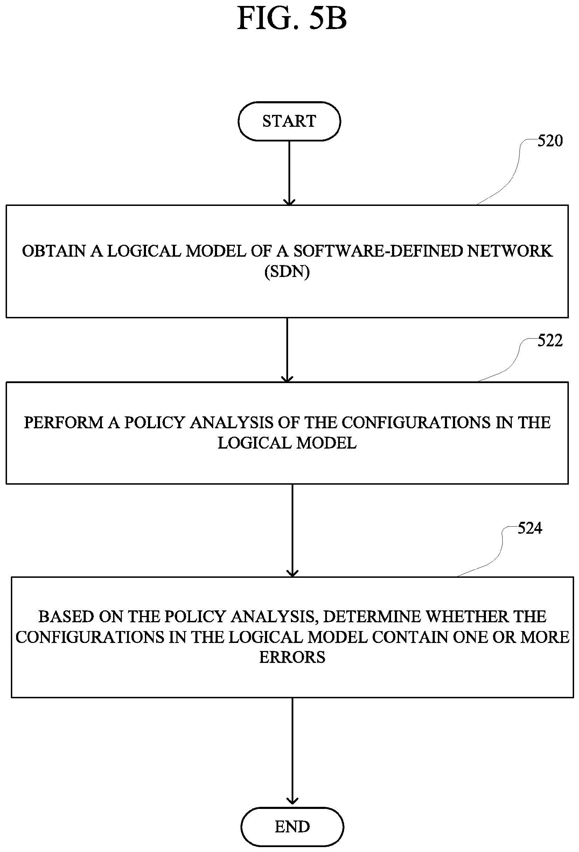

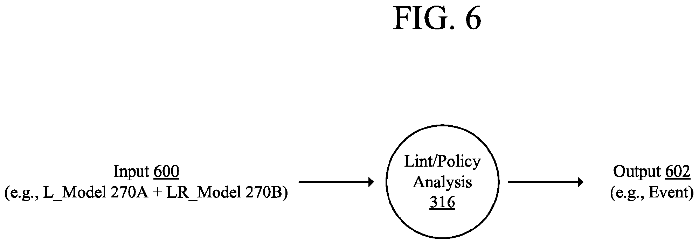

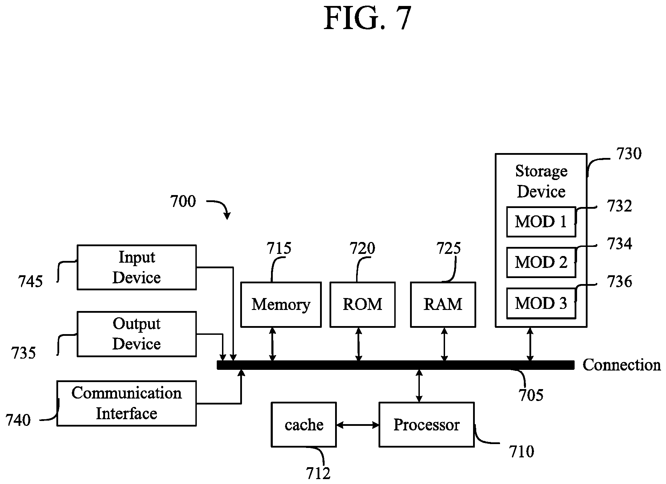

The disclosed technology addresses the need in the art for checking an intent specification for a network and verifying changes to the intent specification. The present technology involves system, methods, and computer-readable media for checking inconsistencies within an intent specification of a network. The present technology will be described in the following disclosure as follows. The discussion begins with an introductory discussion of network assurance and a description of example computing environments, as illustrated in FIGs. 1A and 1B. A discussion of network models for network assurance, as shown in FIGs. 2A through 2D, and network assurance systems and methods, as shown in FIGs. 3A-C and 4, will then follow. The discussion continues with a description and examples of intent specification checks for detecting inconsistencies within an intent specification, as illustrated in FIG. 5. The discussion concludes with a description of an example network device, as illustrated in FIG. 6, and an example computing device, as illustrated in FIG. 7, including example hardware components suitable for hosting software applications and performing computing operations.

The disclosure now turns to an introductory discussion of network assurance.

Network assurance is the guarantee or determination that the network is behaving as intended by the network operator and has been configured properly (e.g., the network is doing what it is intended to do). Intent can encompass various network operations, such as bridging, routing, security, service chaining, endpoints, compliance, QoS (Quality of Service), audits, etc. Intent can be embodied in one or more policies, settings, configurations, etc., defined for the network and individual network elements (e.g., switches, routers, applications, resources, etc.). However, often times, the configurations, policies, etc., defined by a network operator are incorrect or not accurately reflected in the actual behavior of the network. For example, a network operator specifies a configuration A for one or more types of traffic but later finds out that the network is actually applying configuration B to that traffic or otherwise processing that traffic in a manner that is inconsistent with configuration A. This can be a result of many different causes, such as hardware errors, software bugs, varying priorities, configuration conflicts, misconfiguration of one or more settings, improper rule rendering by devices, unexpected errors or events, software upgrades, configuration changes, failures, etc. As another example, a network operator implements configuration C but one or more other configurations result in the network behaving in a manner that is inconsistent with the intent reflected by the implementation of configuration C. For example, such a situation can result when configuration C conflicts with other configurations in the network.

The approaches herein can provide network assurance by modeling various aspects of the network and/or performing consistency checks as well as other network assurance checks. The network assurance approaches herein can be implemented in various types of networks, including a private network, such as a local area network (LAN); an enterprise network; a standalone or traditional network, such as a data center network; a network including a physical or underlay layer and a logical or overlay layer, such as a VXLAN or software-defined network (SDN) (e.g., Application Centric Infrastructure (ACI) or VMware NSX networks); etc.

Network models can be constructed for a network and implemented for network assurance. A network model can provide a representation of one or more aspects of a network, including, without limitation the network's policies, configurations, requirements, security, routing, topology, applications, hardware, filters, contracts, access control lists, infrastructure, etc. As will be further explained below, different types of models can be generated for a network.

Such models can be implemented to ensure that the behavior of the network will be consistent (or is consistent) with the intended behavior reflected through specific configurations (e.g., policies, settings, definitions, etc.) implemented by the network operator. Unlike traditional network monitoring, which involves sending and analyzing data packets and observing network behavior, network assurance can be performed through modeling without necessarily ingesting packet data or monitoring traffic or network behavior. This can result in foresight, insight, and hindsight: problems can be prevented before they occur, identified when they occur, and fixed immediately after they occur.

Thus, network assurance can involve modeling properties of the network to deterministically predict the behavior of the network. The network can be determined to be healthy if the model(s) indicate proper behavior (e.g., no inconsistencies, conflicts, errors, etc.). The network can be determined to be functional, but not fully healthy, if the modeling indicates proper behavior but some inconsistencies. The network can be determined to be non-functional and not healthy if the modeling indicates improper behavior and errors. If inconsistencies or errors are detected by the modeling, a detailed analysis of the corresponding model(s) can allow one or more underlying or root problems to be identified with great accuracy.

The modeling can consume numerous types of smart events which model a large amount of behavioral aspects of the network. Smart events can impact various aspects of the network, such as underlay services, overlay services, tenant connectivity, tenant security, tenant end point (EP) mobility, tenant policy, tenant routing, resources, etc.

Having described various aspects of network assurance, the disclosure now turns to a discussion of example network environments for network assurance.

FIG. 1A illustrates a diagram of an example Network Environment 100, such as a data center. The Network Environment 100 can include a Fabric 120 which can represent the physical layer or infrastructure (e.g., underlay) of the Network Environment 100. Fabric 120 can include Spines 102 (e.g., spine routers or switches) and Leafs 104 (e.g., leaf routers or switches) which can be interconnected for routing or switching traffic in the Fabric 120. Spines 102 can interconnect Leafs 104 in the Fabric 120, and Leafs 104 can connect the Fabric 120 to an overlay or logical portion of the Network Environment 100, which can include application services, servers, virtual machines, containers, endpoints, etc. Thus, network connectivity in the Fabric 120 can flow from Spines 102 to Leafs 104, and vice versa. The interconnections between Leafs 104 and Spines 102 can be redundant (e.g., multiple interconnections) to avoid a failure in routing. In some embodiments, Leafs 104 and Spines 102 can be fully connected, such that any given Leaf is connected to each of the Spines 102, and any given Spine is connected to each of the Leafs 104. Leafs 104 can be, for example, top-of-rack ("ToR") switches, aggregation switches, gateways, ingress and/or egress switches, provider edge devices, and/or any other type of routing or switching device.

Leafs 104 can be responsible for routing and/or bridging tenant or customer packets and applying network policies or rules. Network policies and rules can be driven by one or more Controllers 116, and/or implemented or enforced by one or more devices, such as Leafs 104. Leafs 104 can connect other elements to the Fabric 120. For example, Leafs 104 can connect Servers 106, Hypervisors 108, Virtual Machines (VMs) 110, Applications 112, Network Device 114, etc., with Fabric 120. Such elements can reside in one or more logical or virtual layers or networks, such as an overlay network. In some cases, Leafs 104 can encapsulate and decapsulate packets to and from such elements (e.g., Servers 106) in order to enable communications throughout Network Environment 100 and Fabric 120. Leafs 104 can also provide any other devices, services, tenants, or workloads with access to Fabric 120. In some cases, Servers 106 connected to Leafs 104 can similarly encapsulate and decapsulate packets to and from Leafs 104. For example, Servers 106 can include one or more virtual switches or routers or tunnel endpoints for tunneling packets between an overlay or logical layer hosted by, or connected to, Servers 106 and an underlay layer represented by Fabric 120 and accessed via Leafs 104.

Applications 112 can include software applications, services, containers, appliances, functions, service chains, etc. For example, Applications 112 can include a firewall, a database, a CDN server, an IDS/IPS, a deep packet inspection service, a message router, a virtual switch, etc. An application from Applications 112 can be distributed, chained, or hosted by multiple endpoints (e.g., Servers 106, VMs 110, etc.), or may run or execute entirely from a single endpoint.

VMs 110 can be virtual machines hosted by Hypervisors 108 or virtual machine managers running on Servers 106. VMs 110 can include workloads running on a guest operating system on a respective server. Hypervisors 108 can provide a layer of software, firmware, and/or hardware that creates, manages, and/or runs the VMs 110. Hypervisors 108 can allow VMs 110 to share hardware resources on Servers 106, and the hardware resources on Servers 106 to appear as multiple, separate hardware platforms. Moreover, Hypervisors 108 on Servers 106 can host one or more VMs 110.

In some cases, VMs 110 and/or Hypervisors 108 can be migrated to other Servers 106. Servers 106 can similarly be migrated to other locations in Network Environment 100. For example, a server connected to a specific leaf can be changed to connect to a different or additional leaf. Such configuration or deployment changes can involve modifications to settings, configurations and policies that are applied to the resources being migrated as well as other network components.

In some cases, one or more Servers 106, Hypervisors 108, and/or VMs 110 can represent or reside in a tenant or customer space. Tenant space can include workloads, services, applications, devices, networks, and/or resources that are associated with one or more clients or subscribers. Accordingly, traffic in Network Environment 100 can be routed based on specific tenant policies, spaces, agreements, configurations, etc. Moreover, addressing can vary between one or more tenants. In some configurations, tenant spaces can be divided into logical segments and/or networks and separated from logical segments and/or networks associated with other tenants. Addressing, policy, security and configuration information between tenants can be managed by Controllers 116, Servers 106, Leafs 104, etc.

Configurations in Network Environment 100 can be implemented at a logical level, a hardware level (e.g., physical), and/or both. For example, configurations can be implemented at a logical and/or hardware level based on endpoint or resource attributes, such as endpoint types and/or application groups or profiles, through a software-defined network (SDN) framework (e.g., Application-Centric Infrastructure (ACI) or VMWARE NSX). To illustrate, one or more administrators can define configurations at a logical level (e.g., application or software level) through Controllers 116, which can implement or propagate such configurations through Network Environment 100. In some examples, Controllers 116 can be Application Policy Infrastructure Controllers (APICs) in an ACI framework. In other examples, Controllers 116 can be one or more management components for associated with other SDN solutions, such as NSX Managers.

Such configurations can define rules, policies, priorities, protocols, attributes, objects, etc., for routing and/or classifying traffic in Network Environment 100. For example, such configurations can define attributes and objects for classifying and processing traffic based on Endpoint Groups (EPGs), Security Groups (SGs), VM types, bridge domains (BDs), virtual routing and forwarding instances (VRFs), tenants, priorities, firewall rules, etc. Other example network objects and configurations are further described below. Traffic policies and rules can be enforced based on tags, attributes, or other characteristics of the traffic, such as protocols associated with the traffic, EPGs associated with the traffic, SGs associated with the traffic, network address information associated with the traffic, etc. Such policies and rules can be enforced by one or more elements in Network Environment 100, such as Leafs 104, Servers 106, Hypervisors 108, Controllers 116, etc. As previously explained, Network Environment 100 can be configured according to one or more particular software-defined network (SDN) solutions, such as CISCO ACI or VMWARE NSX. These example SDN solutions are briefly described below.

ACI can provide an application-centric or policy-based solution through scalable distributed enforcement. ACI supports integration of physical and virtual environments under a declarative configuration model for networks, servers, services, security, requirements, etc. For example, the ACI framework implements EPGs, which can include a collection of endpoints or applications that share common configuration requirements, such as security, QoS, services, etc. Endpoints can be virtual/logical or physical devices, such as VMs, containers, hosts, or physical servers that are connected to Network Environment 100. Endpoints can have one or more attributes such as a VM name, guest OS name, a security tag, application profile, etc. Application configurations can be applied between EPGs, instead of endpoints directly, in the form of contracts. Leafs 104 can classify incoming traffic into different EPGs. The classification can be based on, for example, a network segment identifier such as a VLAN ID, VXLAN Network Identifier (VNID), NVGRE Virtual Subnet Identifier (VSID), MAC address, IP address, etc.

In some cases, classification in the ACI infrastructure can be implemented by Application Virtual Switches (AVS), which can run on a host, such as a server or switch. For example, an AVS can classify traffic based on specified attributes, and tag packets of different attribute EPGs with different identifiers, such as network segment identifiers (e.g., VLAN ID). Finally, Leafs 104 can tie packets with their attribute EPGs based on their identifiers and enforce policies, which can be implemented and/or managed by one or more Controllers 116. Leaf 104 can classify to which EPG the traffic from a host belongs and enforce policies accordingly.

Another example SDN solution is based on VMWARE NSX. With VMWARE NSX, hosts can run a distributed firewall (DFW) which can classify and process traffic. Consider a case where three types of VMs, namely, application, database and web VMs, are put into a single layer-2 network segment. Traffic protection can be provided within the network segment based on the VM type. For example, HTTP traffic can be allowed among web VMs, and disallowed between a web VM and an application or database VM. To classify traffic and implement policies, VMWARE NSX can implement security groups, which can be used to group the specific VMs (e.g., web VMs, application VMs, database VMs). DFW rules can be configured to implement policies for the specific security groups. To illustrate, in the context of the previous example, DFW rules can be configured to block HTTP traffic between web, application, and database security groups.

Returning now to FIG. 1A, Network Environment 100 can deploy different hosts via Leafs 104, Servers 106, Hypervisors 108, VMs 110, Applications 112, and Controllers 116, such as VMWARE ESXi hosts, WINDOWS HYPER-V hosts, bare metal physical hosts, etc. Network Environment 100 may interoperate with a variety of Hypervisors 108, Servers 106 (e.g., physical and/or virtual servers), SDN orchestration platforms, etc. Network Environment 100 may implement a declarative model to allow its integration with application design and holistic network policy.

Controllers 116 can provide centralized access to fabric information, application configuration, resource configuration, application-level configuration modeling for a software-defined network (SDN) infrastructure, integration with management systems or servers, etc. Controllers 116 can form a control plane that interfaces with an application plane via northbound APIs and a data plane via southbound APIs.

As previously noted, Controllers 116 can define and manage application-level model(s) for configurations in Network Environment 100. In some cases, application or device configurations can also be managed and/or defined by other components in the network. For example, a hypervisor or virtual appliance, such as a VM or container, can run a server or management tool to manage software and services in Network Environment 100, including configurations and settings for virtual appliances.

As illustrated above, Network Environment 100 can include one or more different types of SDN solutions, hosts, etc. For the sake of clarity and explanation purposes, various examples in the disclosure will be described with reference to an ACI framework, and Controllers 116 may be interchangeably referenced as controllers, APICs, or APIC controllers. However, it should be noted that the technologies and concepts herein are not limited to ACI solutions and may be implemented in other architectures and scenarios, including other SDN solutions as well as other types of networks which may not deploy an SDN solution.

Further, as referenced herein, the term "hosts" can refer to Servers 106 (e.g., physical or logical), Hypervisors 108, VMs 110, containers (e.g., Applications 112), etc., and can run or include any type of server or application solution. Non-limiting examples of "hosts" can include virtual switches or routers, such as distributed virtual switches (DVS), application virtual switches (AVS), vector packet processing (VPP) switches; VCENTER and NSX MANAGERS; bare metal physical hosts; HYPER-V hosts; VMs; DOCKER Containers; etc.

FIG. 1B illustrates another example of Network Environment 100. In this example, Network Environment 100 includes Endpoints 122 connected to Leafs 104 in Fabric 120. Endpoints 122 can be physical and/or logical or virtual entities, such as servers, clients, VMs, hypervisors, software containers, applications, resources, network devices, workloads, etc. For example, an Endpoint 122 can be an object that represents a physical device (e.g., server, client, switch, etc.), an application (e.g., web application, database application, etc.), a logical or virtual resource (e.g., a virtual switch, a virtual service appliance, a virtualized network function (VNF), a VM, a service chain, etc.), a container running a software resource (e.g., an application, an appliance, a VNF, a service chain, etc.), storage, a workload or workload engine, etc. Endpoints 122 can have an address (e.g., an identity), a location (e.g., host, network segment, virtual routing and forwarding (VRF) instance, domain, etc.), one or more attributes (e.g., name, type, version, patch level, OS name, OS type, etc.), a tag (e.g., security tag), a profile, etc.

Endpoints 122 can be associated with respective Logical Groups 118. Logical Groups 118 can be logical entities containing endpoints (physical and/or logical or virtual) grouped together according to one or more attributes, such as endpoint type (e.g., VM type, workload type, application type, etc.), one or more requirements (e.g., policy requirements, security requirements, QoS requirements, customer requirements, resource requirements, etc.), a resource name (e.g., VM name, application name, etc.), a profile, platform or operating system (OS) characteristics (e.g., OS type or name including guest and/or host OS, etc.), an associated network or tenant, one or more policies, a tag, etc. For example, a logical group can be an object representing a collection of endpoints grouped together. To illustrate, Logical Group 1 can contain client endpoints, Logical Group 2 can contain web server endpoints, Logical Group 3 can contain application server endpoints, Logical Group N can contain database server endpoints, etc. In some examples, Logical Groups 118 are EPGs in an ACI environment and/or other logical groups (e.g., SGs) in another SDN environment.

Traffic to and/or from Endpoints 122 can be classified, processed, managed, etc., based Logical Groups 118. For example, Logical Groups 118 can be used to classify traffic to or from Endpoints 122, apply policies to traffic to or from Endpoints 122, define relationships between Endpoints 122, define roles of Endpoints 122 (e.g., whether an endpoint consumes or provides a service, etc.), apply rules to traffic to or from Endpoints 122, apply filters or access control lists (ACLs) to traffic to or from Endpoints 122, define communication paths for traffic to or from Endpoints 122, enforce requirements associated with Endpoints 122, implement security and other configurations associated with Endpoints 122, etc.

In an ACI environment, Logical Groups 118 can be EPGs used to define contracts in the ACI. Contracts can include rules specifying what and how communications between EPGs take place. For example, a contract can define what provides a service, what consumes a service, and what policy objects are related to that consumption relationship. A contract can include a policy that defines the communication path and all related elements of a communication or relationship between endpoints or EPGs. For example, a Web EPG can provide a service that a Client EPG consumes, and that consumption can be subject to a filter (ACL) and a service graph that includes one or more services, such as firewall inspection services and server load balancing.

FIG. 2A illustrates a diagram of an example Management Information Model 200 for an SDN network, such as Network Environment 100. The following discussion of Management Information Model 200 references various terms which shall also be used throughout the disclosure. Accordingly, for clarity, the disclosure shall first provide below a list of terminology, which will be followed by a more detailed discussion of Management Information Model 200.

As used herein, an "Alias" can refer to a changeable name for a given object. Thus, even if the name of an object, once created, cannot be changed, the Alias can be a field that can be changed.

As used herein, the term "Aliasing" can refer to a rule (e.g., contracts, policies, configurations, etc.) that overlaps one or more other rules. For example, Contract 1 defined in a logical model of a network can be said to be aliasing Contract 2 defined in the logical model of the network if Contract 1 overlaps Contract 1. In this example, by aliasing Contract 2, Contract 1 may render Contract 2 redundant or inoperable. For example, if Contract 1 has a higher priority than Contract 2, such aliasing can render Contract 2 redundant based on Contract 1's overlapping and higher priority characteristics.

As used herein, the term "APIC" can refer to one or more controllers (e.g., Controllers 116) in an ACI framework. The APIC can provide a unified point of automation and management, policy programming, application deployment, health monitoring for an ACI multitenant fabric. The APIC can be implemented as a single controller, a distributed controller, or a replicated, synchronized, and/or clustered controller.

As used herein, the term "BDD" can refer to a binary decision tree . A binary decision tree can be a data structure representing functions, such as Boolean functions.

As used herein, the term "BD" can refer to a bridge domain. A bridge domain can be a set of logical ports that share the same flooding or broadcast characteristics. Like a virtual LAN (VLAN), bridge domains can span multiple devices. A bridge domain can be a L2 (Layer 2) construct.

As used herein, a "Consumer" can refer to an endpoint, resource, and/or EPG that consumes a service.

As used herein, a "Context" can refer to an L3 (Layer 3) address domain that allows multiple instances of a routing table to exist and work simultaneously. This increases functionality by allowing network paths to be segmented without using multiple devices. Non-limiting examples of a context or L3 address domain can include a Virtual Routing and Forwarding (VRF) instance, a private network, and so forth.

As used herein, the term "Contract" can refer to rules or configurations that specify what and how communications in a network are conducted (e.g., allowed, denied, filtered, processed, etc.). In an ACI network, contracts can specify how communications between endpoints and/or EPGs take place. In some examples, a contract can provide rules and configurations akin to an Access Control List (ACL).

As used herein, the term "Distinguished Name" (DN) can refer to a unique name that describes an object, such as an MO, and locates its place in Management Information Model 200. In some cases, the DN can be (or equate to) a Fully Qualified Domain Name (FQDN).

As used herein, the term "Endpoint Group" (EPG) can refer to a logical entity or object associated with a collection or group of endoints as previously described with reference to FIG. 1B.

As used herein, the term "Filter" can refer to a parameter or configuration for allowing communications. For example, in a whitelist model where all communications are blocked by default, a communication must be given explicit permission to prevent such communication from being blocked. A filter can define permission(s) for one or more communications or packets. A filter can thus function similar to an ACL or Firewall rule. In some examples, a filter can be implemented in a packet (e.g., TCP/IP) header field, such as L3 protocol type, L4 (Layer 4) ports, and so on, which is used to allow inbound or outbound communications between endpoints or EPGs, for example.

As used herein, the term "L2 Out" can refer to a bridged connection. A bridged connection can connect two or more segments of the same network so that they can communicate. In an ACI framework, an L2 out can be a bridged (Layer 2) connection between an ACI fabric (e.g., Fabric 120) and an outside Layer 2 network, such as a switch.

As used herein, the term "L3 Out" can refer to a routed connection. A routed Layer 3 connection uses a set of protocols that determine the path that data follows in order to travel across networks from its source to its destination. Routed connections can perform forwarding (e.g., IP forwarding) according to a protocol selected, such as BGP (border gateway protocol), OSPF (Open Shortest Path First), EIGRP (Enhanced Interior Gateway Routing Protocol), etc.

As used herein, the term "Managed Object" (MO) can refer to an abstract representation of objects that are managed in a network (e.g., Network Environment 100). The objects can be concrete objects (e.g., a switch, server, adapter, etc.), or logical objects (e.g., an application profile, an EPG, a fault, etc.). The MOs can be network resources or elements that are managed in the network. For example, in an ACI environment, an MO can include an abstraction of an ACI fabric (e.g., Fabric 120) resource.

As used herein, the term "Management Information Tree" (MIT) can refer to a hierarchical management information tree containing the MOs of a system. For example, in ACI, the MIT contains the MOs of the ACI fabric (e.g., Fabric 120). The MIT can also be referred to as a Management Information Model (MIM), such as Management Information Model 200.

As used herein, the term "Policy" can refer to one or more specifications for controlling some aspect of system or network behavior. For example, a policy can include a named entity that contains specifications for controlling some aspect of system behavior. To illustrate, a Layer 3 Outside Network Policy can contain the BGP protocol to enable BGP routing functions when connecting Fabric 120 to an outside Layer 3 network.

As used herein, the term "Profile" can refer to the configuration details associated with a policy. For example, a profile can include a named entity that contains the configuration details for implementing one or more instances of a policy. To illustrate, a switch node profile for a routing policy can contain the switch-specific configuration details to implement the BGP routing protocol.

As used herein, the term "Provider" refers to an object or entity providing a service. For example, a provider can be an EPG that provides a service.

As used herein, the term "Subject" refers to one or more parameters in a contract for defining communications. For example, in ACI, subjects in a contract can specify what information can be communicated and how. Subjects can function similar to ACLs.

As used herein, the term "Tenant" refers to a unit of isolation in a network. For example, a tenant can be a secure and exclusive virtual computing environment. In ACI, a tenant can be a unit of isolation from a policy perspective, but does not necessarily represent a private network. Indeed, ACI tenants can contain multiple private networks (e.g., VRFs). Tenants can represent a customer in a service provider setting, an organization or domain in an enterprise setting, or just a grouping of policies.

As used herein, the term "VRF" refers to a virtual routing and forwarding instance. The VRF can define a Layer 3 address domain that allows multiple instances of a routing table to exist and work simultaneously. This increases functionality by allowing network paths to be segmented without using multiple devices. Also known as a context or private network.

Having described various terms used herein, the disclosure now returns to a discussion of Management Information Model (MIM) 200 in FIG. 2A. As previously noted, MIM 200 can be a hierarchical management information tree or MIT. Moreover, MIM 200 can be managed and processed by Controllers 116, such as APICs in an ACI. Controllers 116 can enable the control of managed resources by presenting their manageable characteristics as object properties that can be inherited according to the location of the object within the hierarchical structure of the model.

The hierarchical structure of MIM 200 starts with Policy Universe 202 at the top (Root) and contains parent and child nodes 116, 204, 206, 208, 210, 212. Nodes 116, 202, 204, 206, 208, 210, 212 in the tree represent the managed objects (MOs) or groups of objects. Each object in the fabric (e.g., Fabric 120) has a unique distinguished name (DN) that describes the object and locates its place in the tree. The Nodes 116, 202, 204, 206, 208, 210, 212 can include the various MOs, as described below, which contain policies that govern the operation of the system.

### Controllers 116

Controllers 116 (e.g., APIC controllers) can provide management, policy programming, application deployment, and health monitoring for Fabric 120.

### Node 204

Node 204 includes a tenant container for policies that enable an administrator to exercise domain-based access control. Non-limiting examples of tenants can include:

User tenants defined by the administrator according to the needs of users. They contain policies that govern the operation of resources such as applications, databases, web servers, network-attached storage, virtual machines, and so on.

The common tenant is provided by the system but can be configured by the administrator. It contains policies that govern the operation of resources accessible to all tenants, such as firewalls, load balancers, Layer 4 to Layer 7 services, intrusion detection appliances, and so on.

The infrastructure tenant is provided by the system but can be configured by the administrator. It contains policies that govern the operation of infrastructure resources such as the fabric overlay (e.g., VXLAN). It also enables a fabric provider to selectively deploy resources to one or more user tenants. Infrastructure tenant polices can be configurable by the administrator.

The management tenant is provided by the system but can be configured by the administrator. It contains policies that govern the operation of fabric management functions used for in-band and out-of-band configuration of fabric nodes. The management tenant contains a private out-of-bound address space for the Controller/Fabric internal communications that is outside the fabric data path that provides access through the management port of the switches. The management tenant enables discovery and automation of communications with virtual machine controllers.

### Node 206

Node 206 can contain access policies that govern the operation of switch access ports that provide connectivity to resources such as storage, compute, Layer 2 and Layer 3 (bridged and routed) connectivity, virtual machine hypervisors, Layer 4 to Layer 7 devices, and so on. If a tenant requires interface configurations other than those provided in the default link, Cisco Discovery Protocol (CDP), Link Layer Discovery Protocol (LLDP), Link Aggregation Control Protocol (LACP), or Spanning Tree Protocol (STP), an administrator can configure access policies to enable such configurations on the access ports of Leafs 104.

Node 206 can contain fabric policies that govern the operation of the switch fabric ports, including such functions as Network Time Protocol (NTP) server synchronization, Intermediate System-to-Intermediate System Protocol (IS-IS), Border Gateway Protocol (BGP) route reflectors, Domain Name System (DNS) and so on. The fabric MO contains objects such as power supplies, fans, chassis, and so on.

### Node 208

Node 208 can contain VM domains that group VM controllers with similar networking policy requirements. VM controllers can share virtual space (e.g., VLAN or VXLAN space) and application EPGs. Controllers 116 communicate with the VM controller to publish network configurations such as port groups that are then applied to the virtual workloads.

### Node 210

Node 210 can contain Layer 4 to Layer 7 service integration life cycle automation framework that enables the system to dynamically respond when a service comes online or goes offline. Policies can provide service device package and inventory management functions.

### Node 212

Node 212 can contain access, authentication, and accounting (AAA) policies that govern user privileges, roles, and security domains of Fabric 120.

The hierarchical policy model can fit well with an API, such as a REST API interface. When invoked, the API can read from or write to objects in the MIT. URLs can map directly into distinguished names that identify objects in the MIT. Data in the MIT can be described as a self-contained structured tree text document encoded in XML or JSON, for example.

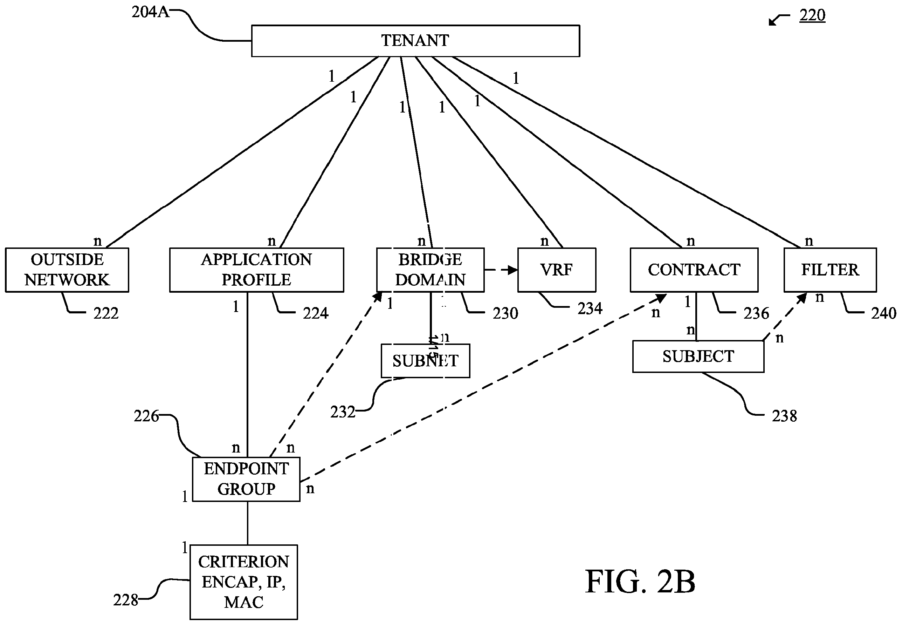

FIG. 2B illustrates an example object model 220 for a tenant portion of MIM 200. As previously noted, a tenant is a logical container for application policies that enable an administrator to exercise domain-based access control. A tenant thus represents a unit of isolation from a policy perspective, but it does not necessarily represent a private network. Tenants can represent a customer in a service provider setting, an organization or domain in an enterprise setting, or just a convenient grouping of policies. Moreover, tenants can be isolated from one another or can share resources.

Tenant portion 204A of MIM 200 can include various entities, and the entities in Tenant Portion 204A can inherit policies from parent entities. Non-limiting examples of entities in Tenant Portion 204A can include Filters 240, Contracts 236, Outside Networks 222, Bridge Domains 230, VRF Instances 234, and Application Profiles 224.

Bridge Domains 230 can include Subnets 232. Contracts 236 can include Subjects 238. Application Profiles 224 can contain one or more EPGs 226. Some applications can contain multiple components. For example, an e-commerce application could require a web server, a database server, data located in a storage area network, and access to outside resources that enable financial transactions. Application Profile 224 contains as many (or as few) EPGs as necessary that are logically related to providing the capabilities of an application.

EPG 226 can be organized in various ways, such as based on the application they provide, the function they provide (such as infrastructure), where they are in the structure of the data center (such as DMZ), or whatever organizing principle that a fabric or tenant administrator chooses to use.

EPGs in the fabric can contain various types of EPGs, such as application EPGs, Layer 2 external outside network instance EPGs, Layer 3 external outside network instance EPGs, management EPGs for out-of-band or in-band access, etc. EPGs 226 can also contain Attributes 228, such as encapsulation-based EPGs, IP-based EPGs, or MAC-based EPGs.

As previously mentioned, EPGs can contain endpoints (e.g., EPs 122) that have common characteristics or attributes, such as common policy requirements (e.g., security, virtual machine mobility (VMM), QoS, or Layer 4 to Layer 7 services). Rather than configure and manage endpoints individually, they can be placed in an EPG and managed as a group.

Policies apply to EPGs, including the endpoints they contain. An EPG can be statically configured by an administrator in Controllers 116, or dynamically configured by an automated system such as VCENTER or OPENSTACK.

To activate tenant policies in Tenant Portion 204A, fabric access policies should be configured and associated with tenant policies. Access policies enable an administrator to configure other network configurations, such as port channels and virtual port channels, protocols such as LLDP, CDP, or LACP, and features such as monitoring or diagnostics.

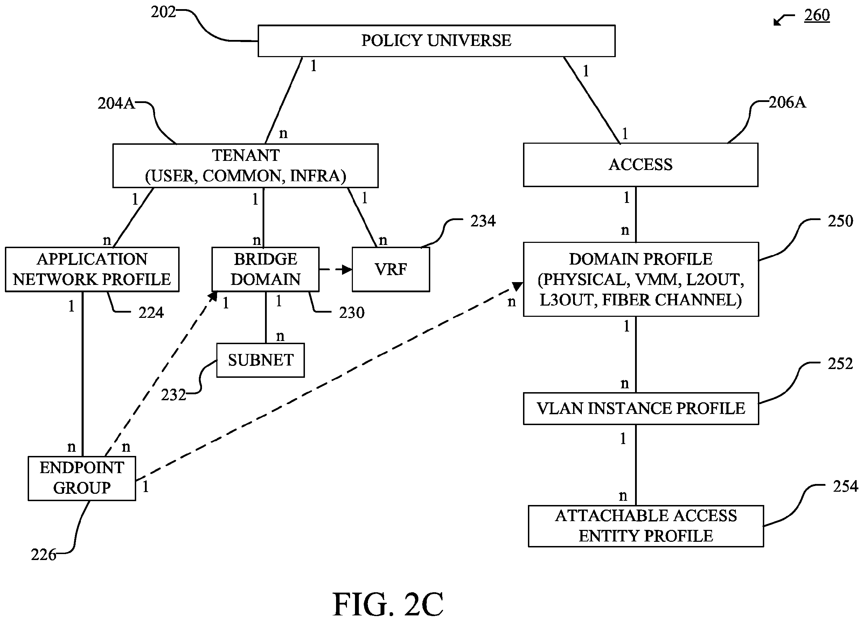

FIG. 2C illustrates an example Association 260 of tenant entities and access entities in MIM 200. Policy Universe 202 contains Tenant Portion 204A and Access Portion 206A. Thus, Tenant Portion 204A and Access Portion 206A are associated through Policy Universe 202.

Access Portion 206A can contain fabric and infrastructure access policies. Typically, in a policy model, EPGs are coupled with VLANs. For traffic to flow, an EPG is deployed on a leaf port with a VLAN in a physical, VMM, L2 out, L3 out, or Fiber Channel domain, for example.

Access Portion 206A thus contains Domain Profile 236 which can define a physical, VMM, L2 out, L3 out, or Fiber Channel domain, for example, to be associated to the EPGs. Domain Profile 236 contains VLAN Instance Profile 238 (e.g., VLAN pool) and Attacheable Access Entity Profile (AEP) 240, which are associated directly with application EPGs. The AEP 240 deploys the associated application EPGs to the ports to which it is attached, and automates the task of assigning VLANs. While a large data center can have thousands of active VMs provisioned on hundreds of VLANs, Fabric 120 can automatically assign VLAN IDs from VLAN pools. This saves time compared with trunking down VLANs in a traditional data center.

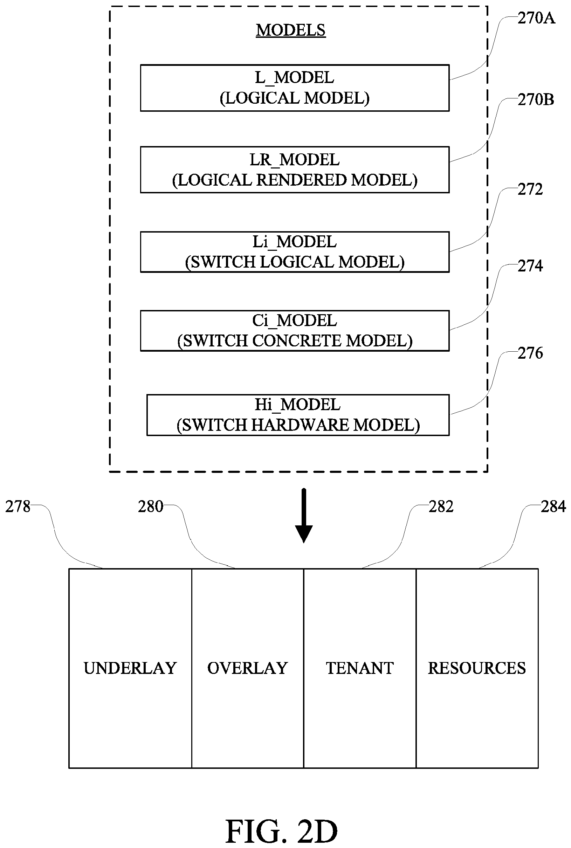

FIG. 2D illustrates a schematic diagram of example models for a network, such as Network Environment 100. The models can be generated based on specific configurations and/or network state parameters associated with various objects, policies, properties, and elements defined in MIM 200. The models can be implemented for network analysis and assurance, and may provide a depiction of the network at various stages of implementation and levels of the network.

As illustrated, the models can include L_Model 270A (Logical Model), LR_Model 270B (Logical Rendered Model or Logical Runtime Model), Li_Model 272 (Logical Model for i), Ci_Model 274 (Concrete model for *i*), and/or Hi_Model 276 (Hardware model or TCAM Model for i).

L_Model 270A is the logical representation of various elements in MIM 200 as configured in a network (e.g., Network Environment 100), such as objects, object properties, object relationships, and other elements in MIM 200 as configured in a network. L_Model 270A can be generated by Controllers 116 based on configurations entered in Controllers 116 for the network, and thus represents the logical configuration of the network at Controllers 116. This is the declaration of the "end-state" expression that is desired when the elements of the network entities (e.g., applications, tenants, etc.) are connected and Fabric 120 is provisioned by Controllers 116. Because L_Model 270A represents the configurations entered in Controllers 116, including the objects and relationships in MIM 200, it can also reflect the "intent" of the administrator: how the administrator wants the network and network elements to behave.

L_Model 270A can be a fabric or network-wide logical model. For example, L_Model 270A can account configurations and objects from each of Controllers 116. As previously explained, Network Environment 100 can include multiple Controllers 116. In some cases, two or more Controllers 116 may include different configurations or logical models for the network. In such cases, L_Model 270A can obtain any of the configurations or logical models from Controllers 116 and generate a fabric or network wide logical model based on the configurations and logical models from all Controllers 116. L_Model 270A can thus incorporate configurations or logical models between Controllers 116 to provide a comprehensive logical model. L_Model 270A can also address or account for any dependencies, redundancies, conflicts, etc., that may result from the configurations or logical models at the different Controllers 116.

LR_Model 270B is the abstract model expression that Controllers 116 (e.g., APICs in ACI) resolve from L_Model 270A. LR_Model 270B can provide the configuration components that would be delivered to the physical infrastructure (e.g., Fabric 120) to execute one or more policies. For example, LR_Model 270B can be delivered to Leafs 104 in Fabric 120 to configure Leafs 104 for communication with attached Endpoints 122. LR_Model 270B can also incorporate state information to capture a runtime state of the network (e.g., Fabric 120).

In some cases, LR_Model 270B can provide a representation of L_Model 270A that is normalized according to a specific format or expression that can be propagated to, and/or understood by, the physical infrastructure of Fabric 120 (e.g., Leafs 104, Spines 102, etc.). For example, LR_Model 270B can associate the elements in L_Model 270A with specific identifiers or tags that can be interpreted and/or compiled by the switches in Fabric 120, such as hardware plane identifiers used as classifiers.

Li_Model 272 is a switch-level or switch-specific model obtained from L_Model 270A and/or LR_Model 270B. Li_Model 272 can project L_Model 270A and/or LR_Model 270B on a specific switch or device *i*, and thus can convey how L_Model 270A and/or LR_Model 270B should appear or be implemented at the specific switch or device *i*.

For example, Li_Model 272 can project L_Model 270A and/or LR_Model 270B pertaining to a specific switch *i* to capture a switch-level representation of L_Model 270A and/or LR_Model 270B at switch *i*. To illustrate, Li_Model 272 L₁ can represent L_Model 270A and/or LR_Model 270B projected to, or implemented at, Leaf 1 (104). Thus, Li_Model 272 can be generated from L_Model 270A and/or LR_Model 270B for individual devices (e.g., Leafs 104, Spines 102, etc.) on Fabric 120.

In some cases, Li_Model 272 can be represented using JSON (JavaScript Object Notation). For example, Li_Model 272 can include JSON objects, such as Rules, Filters, Entries, and Scopes.

Ci_Model 274 is the actual in-state configuration at the individual fabric member *i* (e.g., switch *i*). In other words, Ci_Model 274 is a switch-level or switch-specific model that is based on Li_Model 272. For example, Controllers 116 can deliver Li_Model 272 to Leaf 1 (104). Leaf 1 (104) can take Li_Model 272, which can be specific to Leaf 1 (104), and render the policies in Li_Model 272 into a concrete model, Ci_Model 274, that runs on Leaf 1 (104). Leaf 1 (104) can render Li_Model 272 via the OS on Leaf 1 (104), for example. Thus, Ci_Model 274 can be analogous to compiled software, as it is the form of Li_Model 272 that the switch OS at Leaf 1 (104) can execute.

In some cases, Li_Model 272 and Ci_Model 274 can have a same or similar format. For example, Li_Model 272 and Ci_Model 274 can be based on JSON objects. Having the same or similar format can facilitate objects in Li_Model 272 and Ci_Model 274 to be compared for equivalence or congruence. Such equivalence or congruence checks can be used for network analysis and assurance, as further described herein.

Hi_Model 276 is also a switch-level or switch-specific model for switch *i,* but is based on Ci_Model 274 for switch *i.* Hi_Model 276 is the actual configuration (e.g., rules) stored or rendered on the hardware or memory (e.g., TCAM memory) at the individual fabric member *i* (e.g., switch *i*). For example, Hi_Model 276 can represent the configurations (e.g., rules) which Leaf 1 (104) stores or renders on the hardware (e.g., TCAM memory) of Leaf 1 (104) based on Ci_Model 274 at Leaf 1 (104). The switch OS at Leaf 1 (104) can render or execute Ci_Model 274, and Leaf 1 (104) can store or render the configurations from Ci_Model 274 in storage, such as the memory or TCAM at Leaf 1 (104). The configurations from Hi_Model 276 stored or rendered by Leaf 1 (104) represent the configurations that will be implemented by Leaf 1 (104) when processing traffic.

While Models 272, 274, 276 are shown as device-specific models, similar models can be generated or aggregated for a collection of fabric members (e.g., Leafs 104 and/or Spines 102) in Fabric 120. When combined, device-specific models, such as Model 272, Model 274, and/or Model 276, can provide a representation of Fabric 120 that extends beyond a particular device. For example, in some cases, Li_Model 272, Ci_Model 274, and/or Hi_Model 276 associated with some or all individual fabric members (e.g., Leafs 104 and Spines 102) can be combined or aggregated to generate one or more aggregated models based on the individual fabric members.

As referenced herein, the terms H Model, T Model, and TCAM Model can be used interchangeably to refer to a hardware model, such as Hi_Model 276. For example, Ti Model, Hi Model and TCAMi Model may be used interchangeably to refer to Hi_Model 276.

Models 270A, 270B, 272, 274, 276 can provide representations of various aspects of the network or various configuration stages for MIM 200. For example, one or more of Models 270A, 270B, 272, 274, 276 can be used to generate Underlay Model 278 representing one or more aspects of Fabric 120 (e.g., underlay topology, routing, etc.), Overlay Model 280 representing one or more aspects of the overlay or logical segment(s) of Network Environment 100 (e.g., COOP, MPBGP, tenants, VRFs, VLANs, VXLANs, virtual applications, VMs, hypervisors, virtual switching, etc.), Tenant Model 282 representing one or more aspects of Tenant portion 204A in MIM 200 (e.g., security, forwarding, service chaining, QoS, VRFs, BDs, Contracts, Filters, EPGs, subnets, etc.), Resources Model 284 representing one or more resources in Network Environment 100 (e.g., storage, computing, VMs, port channels, physical elements, etc.), etc.

In general, L_Model 270A can be the high-level expression of what exists in the LR_Model 270B, which should be present on the concrete devices as Ci_Model 274 and Hi_Model 276 expression. If there is any gap between the models, there may be inconsistent configurations or problems.

FIG. 3A illustrates a diagram of an example Assurance Appliance 300 for network assurance. In this example, Assurance Appliance 300 can include *k* VMs 110 operating in cluster mode. VMs are used in this example for explanation purposes. However, it should be understood that other configurations are also contemplated herein, such as use of containers, bare metal devices, Endpoints 122, or any other physical or logical systems. Moreover, while FIG. 3A illustrates a cluster mode configuration, other configurations are also contemplated herein, such as a single mode configuration (e.g., single VM, container, or server) or a service chain for example.

Assurance Appliance 300 can run on one or more Servers 106, VMs 110, Hypervisors 108, EPs 122, Leafs 104, Controllers 116, or any other system or resource. For example, Assurance Appliance 300 can be a logical service or application running on one or more VMs 110 in Network Environment 100.

The Assurance Appliance 300 can include Data Framework 308, which can be based on, for example, APACHE APEX and HADOOP. In some cases, assurance checks can be written as individual operators that reside in Data Framework 308. This enables a natively horizontal scale-out architecture that can scale to arbitrary number of switches in Fabric 120 (e.g., ACI fabric).

Assurance Appliance 300 can poll Fabric 120 at a configurable periodicity (e.g., an epoch). The analysis workflow can be setup as a DAG (Directed Acyclic Graph) of Operators 310, where data flows from one operator to another and eventually results are generated and persisted to Database 302 for each interval (e.g., each epoch).

The north-tier implements API Server (e.g., APACHE Tomcat and Spring framework) 304 and Web Server 306. A graphical user interface (GUI) interacts via the APIs exposed to the customer. These APIs can also be used by the customer to collect data from Assurance Appliance 300 for further integration into other tools.

Operators 310 in Data Framework 308 (e.g., APEX/Hadoop) can together support assurance operations. Below are non-limiting examples of assurance operations that can be performed by Assurance Appliance 300 via Operators 310.

### Security Policy Adherence

Assurance Appliance 300 can check to make sure the configurations or specification from L_Model 270A, which may reflect the user's intent for the network, including for example the security policies and customer-configured contracts, are correctly implemented and/or rendered in Li_Model 272, Ci_Model 274, and Hi_Model 276, and thus properly implemented and rendered by the fabric members (e.g., Leafs 104), and report any errors, contract violations, or irregularities found.

### Static Policy Analysis

Assurance Appliance 300 can check for issues in the specification of the user's intent or intents (e.g., identify contradictory or conflicting policies in L_Model 270A). Assurance Appliance 300 can identify lint events based on the intent specification of a network. The lint and policy analysis can include semantic and/or syntactic checks of the intent specification(s) of a network.

### TCAM Utilization

TCAM is a scarce resource in the fabric (e.g., Fabric 120). However, Assurance Appliance 300 can analyze the TCAM utilization by the network data (e.g., Longest Prefix Match (LPM) tables, routing tables, VLAN tables, BGP updates, etc.), Contracts, Logical Groups 118 (e.g., EPGs), Tenants, Spines 102, Leafs 104, and other dimensions in Network Environment 100 and/or objects in MIM 200, to provide a network operator or user visibility into the utilization of this scarce resource. This can greatly help for planning and other optimization purposes.

### Endpoint Checks

Assurance Appliance 300 can validate that the fabric (e.g. fabric 120) has no inconsistencies in the Endpoint information registered (e.g., two leafs announcing the same endpoint, duplicate subnets, etc.), among other such checks.

### Tenant Routing Checks

Assurance Appliance 300 can validate that BDs, VRFs, subnets (both internal and external), VLANs, contracts, filters, applications, EPGs, etc., are correctly programmed.

### Infrastructure Routing

Assurance Appliance 300 can validate that infrastructure routing (e.g., IS-IS protocol) has no convergence issues leading to black holes, loops, flaps, and other problems.

### MP-BGP Route Reflection Checks

The network fabric (e.g., Fabric 120) can interface with other external networks and provide connectivity to them via one or more protocols, such as Border Gateway Protocol (BGP), Open Shortest Path First (OSPF), etc. The learned routes are advertised within the network fabric via, for example, MP-BGP. These checks can ensure that a route reflection service via, for example, MP-BGP (e.g., from Border Leaf) does not have health issues.

### Logical Lint and Real-time Change Analysis

Assurance Appliance 300 can validate rules in the specification of the network (e.g., L_Model 270A) are complete and do not have inconsistencies or other problems. MOs in the MIM 200 can be checked by Assurance Appliance 300 through syntactic and semantic checks performed on L_Model 270A and/or the associated configurations of the MOs in MIM 200. Assurance Appliance 300 can also verify that unnecessary, stale, unused or redundant configurations, such as contracts, are removed.

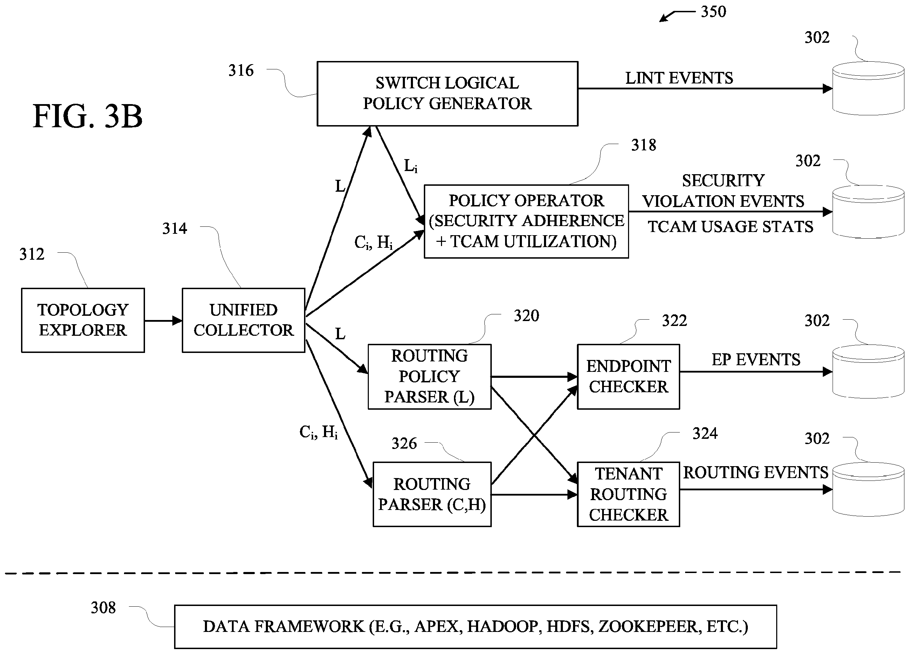

FIG. 3B illustrates an architectural diagram of an example system 350 for network assurance, such as Assurance Appliance 300. In some cases, system 350 can correspond to the DAG of Operators 310 previously discussed with respect to FIG. 3A

In this example, Topology Explorer 312 communicates with Controllers 116 (e.g., APIC controllers) in order to discover or otherwise construct a comprehensive topological view of Fabric 120 (e.g., Spines 102, Leafs 104, Controllers 116, Endpoints 122, and any other components as well as their interconnections). While various architectural components are represented in a singular, boxed fashion, it is understood that a given architectural component, such as Topology Explorer 312, can correspond to one or more individual Operators 310 and may include one or more nodes or endpoints, such as one or more servers, VMs, containers, applications, service functions (e.g., functions in a service chain or virtualized network function), etc.

Topology Explorer 312 is configured to discover nodes in Fabric 120, such as Controllers 116, Leafs 104, Spines 102, etc. Topology Explorer 312 can additionally detect a majority election performed amongst Controllers 116, and determine whether a quorum exists amongst Controllers 116. If no quorum or majority exists, Topology Explorer 312 can trigger an event and alert a user that a configuration or other error exists amongst Controllers 116 that is preventing a quorum or majority from being reached. Topology Explorer 312 can detect Leafs 104 and Spines 102 that are part of Fabric 120 and publish their corresponding out-of-band management network addresses (e.g., IP addresses) to downstream services. This can be part of the topological view that is published to the downstream services at the conclusion of Topology Explorer's 312 discovery epoch (e.g., 5 minutes, or some other specified interval).

In some examples, Topology Explorer 312 can receive as input a list of Controllers 116 (e.g., APIC controllers) that are associated with the network/fabric (e.g., Fabric 120). Topology Explorer 312 can also receive corresponding credentials to login to each controller. Topology Explorer 312 can retrieve information from each controller using, for example, REST calls. Topology Explorer 312 can obtain from each controller a list of nodes (e.g., Leafs 104 and Spines 102), and their associated properties, that the controller is aware of. Topology Explorer 312 can obtain node information from Controllers 116 including, without limitation, an IP address, a node identifier, a node name, a node domain, a node URI, a node_dm, a node role, a node version, etc.

Topology Explorer 312 can also determine if Controllers 116 are in quorum, or are sufficiently communicatively coupled amongst themselves. For example, if there are *n* controllers, a quorum condition might be met when (*n*/2 + 1) controllers are aware of each other and/or are communicatively coupled. Topology Explorer 312 can make the determination of a quorum (or identify any failed nodes or controllers) by parsing the data returned from the controllers, and identifying communicative couplings between their constituent nodes. Topology Explorer 312 can identify the type of each node in the network, e.g. spine, leaf, APIC, etc., and include this information in the topology information generated (e.g., topology map or model).

If no quorum is present, Topology Explorer 312 can trigger an event and alert a user that reconfiguration or suitable attention is required. If a quorum is present, Topology Explorer 312 can compile the network topology information into a JSON object and pass it downstream to other operators or services, such as Unified Collector 314.

Unified Collector 314 can receive the topological view or model from Topology Explorer 312 and use the topology information to collect information for network assurance from Fabric 120. Unified Collector 314 can poll nodes (e.g., Controllers 116, Leafs 104, Spines 102, etc.) in Fabric 120 to collect information from the nodes.

Unified Collector 314 can include one or more collectors (e.g., collector devices, operators, applications, VMs, etc.) configured to collect information from Topology Explorer 312 and/or nodes in Fabric 120. For example, Unified Collector 314 can include a cluster of collectors, and each of the collectors can be assigned to a subset of nodes within the topological model and/or Fabric 120 in order to collect information from their assigned subset of nodes. For performance, Unified Collector 314 can run in a parallel, multi-threaded fashion.

Unified Collector 314 can perform load balancing across individual collectors in order to streamline the efficiency of the overall collection process. Load balancing can be optimized by managing the distribution of subsets of nodes to collectors, for example by randomly hashing nodes to collectors.

In some cases, Assurance Appliance 300 can run multiple instances of Unified Collector 314. This can also allow Assurance Appliance 300 to distribute the task of collecting data for each node in the topology (e.g., Fabric 120 including Spines 102, Leafs 104, Controllers 116, etc.) via sharding and/or load balancing, and map collection tasks and/or nodes to a particular instance of Unified Collector 314 with data collection across nodes being performed in parallel by various instances of Unified Collector 314. Within a given node, commands and data collection can be executed serially. Assurance Appliance 300 can control the number of threads used by each instance of Unified Collector 314 to poll data from Fabric 120.

Unified Collector 314 can collect models (e.g., L_Model 270A and/or LR_Model 270B) from Controllers 116, switch software configurations and models (e.g., Ci_Model 274) from nodes (e.g., Leafs 104 and/or Spines 102) in Fabric 120, hardware configurations and models (e.g., Hi_Model 276) from nodes (e.g., Leafs 104 and/or Spines 102) in Fabric 120, etc. Unified Collector 314 can collect Ci_Model 274 and Hi_Model 276 from individual nodes or fabric members, such as Leafs 104 and Spines 102, and L_Model 270A and/or LR_Model 270B from one or more controllers (e.g., Controllers 116) in Network Environment 100.

Unified Collector 314 can poll the devices that Topology Explorer 312 discovers in order to collect data from Fabric 120 (e.g., from the constituent members of the fabric).Unified Collector 314 can collect the data using interfaces exposed by Controllers 116 and/or switch software (e.g., switch OS), including, for example, a Representation State Transfer (REST) Interface and a Secure Shell (SSH) Interface.

In some cases, Unified Collector 314 collects L_Model 270A, LR_Model 270B, and/or Ci_Model 274 via a REST API, and the hardware information (e.g., configurations, tables, fabric card information, rules, routes, etc.) via SSH using utilities provided by the switch software, such as virtual shell (VSH or VSHELL) for accessing the switch command-line interface (CLI) or VSH_LC shell for accessing runtime state of the line card.

Unified Collector 314 can poll other information from Controllers 116, including, without limitation: topology information, tenant forwarding/routing information, tenant security policies, contracts, interface policies, physical domain or VMM domain information, OOB (out-of-band) management IP's of nodes in the fabric, etc.

Unified Collector 314 can also poll information from nodes (e.g., Leafs 104 and Spines 102) in Fabric 120, including without limitation: Ci_Models 274 for VLANs, BDs, and security policies; Link Layer Discovery Protocol (LLDP) connectivity information of nodes (e.g., Leafs 104 and/or Spines 102); endpoint information from EPM/COOP; fabric card information from Spines 102; routing information base (RIB) tables from nodes in Fabric 120; forwarding information base (FIB) tables from nodes in Fabric 120; security group hardware tables (e.g., TCAM tables) from nodes in Fabric 120; etc.

In some cases, Unified Collector 314 can obtain runtime state from the network and incorporate runtime state information into L_Model 270A and/or LR_Model 270B. Unified Collector 314 can also obtain multiple logical models from Controllers 116 and generate a comprehensive or network-wide logical model (e.g., L_Model 270A and/or LR_Model 270B) based on the logical models. Unified Collector 314 can compare logical models from Controllers 116, resolve dependencies, remove redundancies, etc., and generate a single L_Model 270A and/or LR_Model 270B for the entire network or fabric.

Unified Collector 314 can collect the entire network state across Controllers 116 and fabric nodes or members (e.g., Leafs 104 and/or Spines 102). For example, Unified Collector 314 can use a REST interface and an SSH interface to collect the network state. This information collected by Unified Collector 314 can include data relating to the link layer, VLANs, BDs, VRFs, security policies, etc. The state information can be represented in LR_Model 270B, as previously mentioned. Unified Collector 314 can then publish the collected information and models to any downstream operators that are interested in or require such information. Unified Collector 314 can publish information as it is received, such that data is streamed to the downstream operators.

Data collected by Unified Collector 314 can be compressed and sent to downstream services. In some examples, Unified Collector 314 can collect data in an online fashion or real-time fashion, and send the data downstream, as it is collected, for further analysis. In some examples, Unified Collector 314 can collect data in an offline fashion, and compile the data for later analysis or transmission.

Assurance Appliance 300 can contact Controllers 116, Spines 102, Leafs 104, and other nodes to collect various types of data. In some scenarios, Assurance Appliance 300 may experience a failure (e.g., connectivity problem, hardware or software error, etc.) that prevents it from being able to collect data for a period of time. Assurance Appliance 300 can handle such failures seamlessly, and generate events based on such failures.

Switch Logical Policy Generator 316 can receive L_Model 270A and/or LR_Model 270B from Unified Collector 314 and calculate Li_Model 272 for each network device *i* (e.g., switch i) in Fabric 120. For example, Switch Logical Policy Generator 316 can receive L_Model 270A and/or LR_Model 270B and generate Li_Model 272 by projecting a logical model for each individual node *i* (e.g., Spines 102 and/or Leafs 104) in Fabric 120. Switch Logical Policy Generator 316 can generate Li_Model 272 for each switch in Fabric 120, thus creating a switch logical model based on L_Model 270A and/or LR_Model 270B for each switch.

Each Li_Model 272 can represent L_Model 270A and/or LR_Model 270B as projected or applied at the respective network device *i* (e.g., switch *i*) in Fabric 120. In some cases, Li_Model 272 can be normalized or formatted in a manner that is compatible with the respective network device. For example, Li_Model 272 can be formatted in a manner that can be read or executed by the respective network device. To illustrate, Li_Model 272 can included specific identifiers (e.g., hardware plane identifiers used by Controllers 116 as classifiers, etc.) or tags (e.g., policy group tags) that can be interpreted by the respective network device. In some cases, Li_Model 272 can include JSON objects. For example, Li_Model 272 can include JSON objects to represent rules, filters, entries, scopes, etc.

The format used for Li_Model 272 can be the same as, or consistent with, the format of Ci_Model 274. For example, both Li_Model 272 and Ci_Model 274 may be based on JSON objects. Similar or matching formats can enable Li_Model 272 and Ci_Model 274 to be compared for equivalence or congruence. Such equivalency checks can aid in network analysis and assurance as further explained herein.

Switch Logical Configuration Generator 316 can also perform change analysis and generate lint events or records for problems discovered in L_Model 270A and/or LR_Model 270B. The lint events or records can be used to generate alerts for a user or network operator.

Policy Operator 318 can receive Ci_Model 274 and Hi_Model 276 for each switch from Unified Collector 314, and Li_Model 272 for each switch from Switch Logical Policy Generator 316, and perform assurance checks and analysis (e.g., security adherence checks, TCAM utilization analysis, etc.) based on Ci_Model 274, Hi_Model 276, and Li_Model 272. Policy Operator 318 can perform assurance checks on a switch-by-switch basis by comparing one or more of the models.

Returning to Unified Collector 314, Unified Collector 314 can also send L_Model 270A and/or LR_Model 270B to Routing Policy Parser 320, and Ci_Model 274 and Hi_Model 276 to Routing Parser 326.

Routing Policy Parser 320 can receive L_Model 270A and/or LR_Model 270B and parse the model(s) for information that may be relevant to downstream operators, such as Endpoint Checker 322 and Tenant Routing Checker 324. Similarly, Routing Parser 326 can receive Ci_Model 274 and Hi_Model 276 and parse each model for information for downstream operators, Endpoint Checker 322 and Tenant Routing Checker 324.

After Ci_Model 274, Hi_Model 276, L_Model 270A and/or LR_Model 270B are parsed, Routing Policy Parser 320 and/or Routing Parser 326 can send cleaned-up protocol buffers (Proto Buffs) to the downstream operators, Endpoint Checker 322 and Tenant Routing Checker 324. Endpoint Checker 322 can then generate events related to Endpoint violations, such as duplicate IPs, APIPA, etc., and Tenant Routing Checker 324 can generate events related to the deployment of BDs, VRFs, subnets, routing table prefixes, etc.

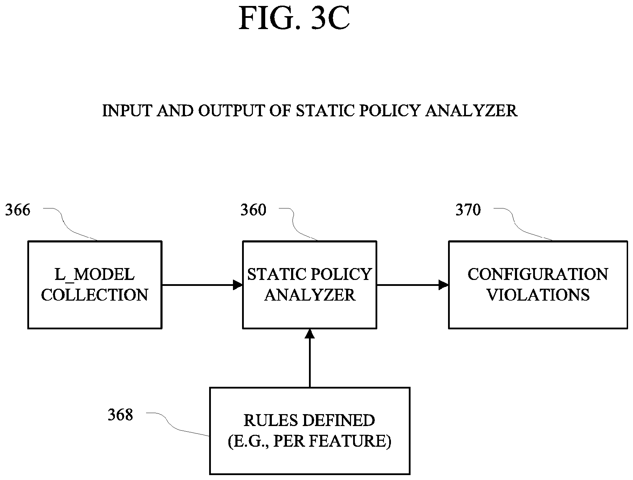

FIG. 3C illustrates a schematic diagram of an example system for static policy analysis in a network (e.g., Network Environment 100). Static Policy Analyzer 360 can perform assurance checks to detect configuration violations, logical lint events, contradictory or conflicting policies, unused contracts, incomplete configurations, etc. Static Policy Analyzer 360 can check the specification of the user's intent or intents in L_Model 270A to determine if any configurations in Controllers 116 are inconsistent with the specification of the user's intent or intents.

Static Policy Analyzer 360 can include one or more of the Operators 310 executed or hosted in Assurance Appliance 300. However, in other configurations, Static Policy Analyzer 360 can run one or more operators or engines that are separate from Operators 310 and/or Assurance Appliance 300. For example, Static Policy Analyzer 360 can be a VM, a cluster of VMs, or a collection of endpoints in a service function chain.

Static Policy Analyzer 360 can receive as input L_Model 270A from Logical Model Collection Process 366 and Rules 368 defined for each feature (e.g., object) in L_Model 270A. Rules 368 can be based on objects, relationships, definitions, configurations, and any other features in MIM 200. Rules 368 can specify conditions, relationships, parameters, and/or any other information for identifying configuration violations or issues.

Moreover, Rules 368 include information for identifying syntactic violations or issues. For example, Rules 368 include one or more rules for performing syntactic checks. Syntactic checks verify that the configuration of L_Model 270A is complete, and help identify configurations or rules that are not being used. Syntactic checks also verify that the configurations in the hierarchical MIM 200 are complete (have been defined) and identify any configurations that are defined but not used. To illustrate, Rules 368 can specify that every tenant in L_Model 270A should have a context configured configured; every contract in L_Model 270A should specify a provider EPG and a consumer EPG; every contract in L_Model 270A should specify a subject, filter, and/or port; etc.

Rules 368 can also include rules for performing semantic checks and identifying semantic violations or issues. Semantic checks can check conflicting rules or configurations. For example, Rule1 and Rule2 can have aliasing issues, Rule1 can be more specific than Rule2 and thereby create conflicts/issues, etc. Rules 368 can define conditions which may result in aliased rules, conflicting rules, etc. To illustrate, Rules 368 can specify that an allow policy for a specific communication between two objects can conflict with a deny policy for the same communication between two objects if the allow policy has a higher priority than the deny policy, or a rule for an object renders another rule unnecessary.

Static Policy Analyzer 360 apply Rules 368 to L_Model 270A to check configurations in L_Model 270A and output Configuration Violation Events 370 (e.g., alerts, logs, notifications, etc.) based on any issues detected. Configuration Violation Events 370 can include semantic or semantic problems, such as incomplete configurations, conflicting configurations, aliased rules, unused configurations, errors, policy violations, misconfigured objects, incomplete configurations, incorrect contract scopes, improper object relationships, etc.

In some cases, Static Policy Analyzer 360 can iteratively traverse each node in a tree generated based on L_Model 270A and/or MIM 200, and apply Rules 368 at each node in the tree to determine if any nodes yield a violation (e.g., incomplete configuration, improper configuration, unused configuration, etc.). Static Policy Analyzer 360 can output Configuration Violation Events 370 when it detects any violations.

FIG. 4 illustrates a schematic diagram of an example assurance scenario 400 for checking inconsistencies within an intent specification. The Intent Specification 402 can be checked to determine whether the intent has been correctly specified for the network. A large number of network errors involve human errors made in configuring the network or defining the intent for the network. Within an SDN, this human error can be magnified as the intent gets centralized and becomes infrastructure wide. A single bad specification can impact the entire network. Moreover, with DevOps, the frequency of change of intent increases significantly which means a single, incorrectly specified disruptive change can occur at any time. The intent specification problem in an SDN network can decrease agility, reduce quality, increase security and compliance risk, and drive operational costs up.

The Assurance Appliance 300 can thus analyze the Intent 402 defined for a network in the Controllers 116 to check for any inconsistencies within the Intent Specification 402. The Intent Specification 402 can include the intent specified on the Controllers 116 or an orchestrator, and reflected in the L_Model 270A. The Assurance Appliance 300 can check for syntactic and/or semantic issues within the Intent Specification 402 (before and/or after the Intent Specification 402 is applied) to obtain an Assurance Determination 404. The Assurance Determination 404 can identify whether the Intent Specification 402 contains any syntactic and/or semantic issues.

For explanation purposes, in this example, the Intent Specification 402 is illustrated as a single intent specification for a fabric or data center. However, it should be noted that in other examples, the Assurance Appliance 300 can check for inconsistencies between the intent specification in different fabrics or data centers.

In other examples, the Assurance Appliance 300 can also check intent realization, which can involve determining whether an intent has been correctly realized. For example, central intent is propagated to nodes in a distributed system. Due to various issues, such as scale, heterogeneity, frequent changes, failures, etc., the realization of intent can be difficult to achieve and may be error prone. In an SDN network, the ability of a user to inspect a distributed state to determine if the intent is realized can be extremely difficult and significantly limited. In many cases, nodes configure their data path dynamically and on-demand to meet intent as necessary. Workload mobility often requires frequent changes in intent realization, which can greatly exacerbate the problem of determining if central intent has been realized.

Given the issues and difficulties associated with intent realization, in some scenarios, the Assurance Appliance 300 can check for inconsistencies between the Intent Specification 402 and its realization. For example, the Assurance Appliance 300 can check for inconsistencies between the Intent Specification 402 and its realization in the control/management plane, inconsistencies between the realization at the control plane versus the realization at the data plane, inconsistencies between an orchestration specification and a realized specification in the Controllers 116, etc.

FIG. 5A illustrates an example flowchart for a network assurance model. At step 500, the method involves data collection. Data collection can include collection of data for operator intent, such as fabric data (e.g., topology, switch, interface policies, application policies, endpoint groups, etc.), network policies (e.g., BDs, VRFs, L2Outs, L3Outs, protocol configurations, etc.), security policies (e.g., contracts, filters, etc.), service chaining policies, and so forth. Data collection can also include data for the concrete, hardware model, such as network configuration (e.g., RIB/FIB, VLAN, MAC, ISIS, DB, BGP, OSPF, ARP, VPC, LLDP, MTU, QoS, etc.), security policies (e.g., TCAM, ECMP tables, etc.), endpoint dynamics (e.g., EPM, COOP EP DB, etc.), statistics (e.g., TCAM rule hits, interface counters, bandwidth, etc.).

At step 502, the method can involve formal modeling and analysis. Formal modeling and analysis can involve determining equivalency between logical and hardware models, such as security policies between models, etc.

At step 504, the method can involve smart event generation. Smart events can be generated using deep object hierarchy for detailed analysis, such as: Tenant, Leaf, VRFs, Rules; Filters, Routes, Prefixes, Port Numbers.

At step 506, the method can involve visualization. Formal models can be used to identify problems for analysis and debugging, in a user-friendly GUI.

FIG. 5B illustrates an example method for checking an intent specification. At step 520, Assurance Appliance 300 obtains, from Controllers 116 in Network Environment 100, a logical model of Network Environment 100. The logical model can be, for example, L_Model 270A as shown in FIG. 2D. The logical model includes configurations of one or more objects in a hierarchical management information tree (MIT), such as MIM 200, that defines manageable objects and object properties for Network Environment 100. In some cases, Controllers 116 can be APICs in an ACI environment. Thus, the manageable objects can be managed objects (MOs) defined in MIM 200, and the configurations can include user-entered configurations via one or more APICs (e.g., Controllers 116). Non-limiting examples of manageable objects can include tenants, contexts, EPGs, contracts, filters, application profiles, BDs, and network fabric access objects.

At step 522, Assurance Appliance 300 performs a policy analysis of configurations in the logical model. The policy analysis is based on the hierarchical MIT and/or one or more rules associated with the logical model. Moreover, the policy analysis can include a syntactic verification of the configurations in the logical model and/or a semantic verification of the configurations in the logical model. The syntactic and/or semantic verifications are based on one or more rules defined for the manageable objects and/or object properties in the hierarchical MIT.

Based on the policy analysis, at step 504, the Assurance Appliance 300 determines whether the configurations in the logical model contain one or more errors. The one or more errors can include lint events, syntactic errors, and/or semantic errors, such as incomplete configurations, unused configurations, redundant configurations, aliased rules, conflicting configurations, incorrect configurations, rule violations, logical lint events, etc.

The configurations in the logical model can include EPG configurations, context configurations, BD configurations, subnet configurations, security policies, etc. The EPG configurations can include EPG deployment information, EPG VLAN allocation, EPG attributes, etc. The security policies can include contracts, filters, entries, and so forth.

The policy analysis can include an EPG analysis, a BD or context policy analysis, a security policy analysis, a semantic analysis for detecting aliasing, etc. The EPG analysis can check the EPG configurations for completeness or configuration mismatches. For example, the EPG analysis can check the completeness of the configured EPG deployment information, EPG VLAN allocations, and/or EPG attributes.

The BD or context policy analysis can check context and BD configurations for correctness. For example, the BD or context policy analysis can check that every BD is part of a unique context and every unique context has at least one valid BD. If the context has a policy enforcement, the context policy analysis can check that appropriate contracts are defined between EPG pairs for data path communications.

The security policy analysis can check for consumer EPG and provider EPG relationships defined in contracts. For example, the logical model can be parsed to determine whether every valid EPG provider has at least one valid matching EPG consumer.

The semantic analysis for detecting aliasing can determine whether any contracts have been aliased. For example, a check can be performed to verify that a rule, such as a higher priority rule, does not mask another rule, such as a lower priority rule. Thus, a check can be performed to determine whether any rules are rendered redundant by a higher priority rule. Any aliased rules identified can be deleted from the logical model to conserve storage space and limit unnecessary rules.

Assurance Appliance 300 can generate one or more notifications for any errors it detects. For example, Assurance Appliance 300 can generate an alert for a contract violation, an aliased rule, missing configurations, conflicting rules, etc. Assurance Appliance 300 can also present a graphical user interface (GUI) with alerts, notifications, and/or visual illustrations of errors detected, as well as other information such as network configurations, network topology, network conditions, recommended configuration changes, suggested fixes, failures, etc.

FIG. 6 illustrates a schematic diagram of an example lint and policy analysis system. The lint and policy analysis system can check an intent specification of a network. The policy analysis system can analyze the logical model (L_Model 270A) and detect configuration errors made by the network operator. To perform policy analysis, the Policy Analysis Generator 316 can take the L_Model 270A as Input 600 and generate Output 602, which can include events such as configuration or runtime errors associated with objects in the L_Model 270A. The policy analysis can include a syntactic and/or a semantic analysis of the L_Model 270A.

In some examples, policy analysis can analyze various aspects of L_Model 270A, such as Endpoint group(EPG) configuration, Context, Bridge Domain/Subnet configuration, Security Policies (e.g., Contracts, Filters, Entries, etc.). Policy analysis can perform numerous checks on the L_Model 270A across various categories to generate Output 602 and report events. The events can be tagged by the primary managed object on which they were found and a secondary managed object list that potentially tells the end user the blast radius of this lint. Below are examples of policy analysis on different aspects of the L_Model 270A.

EPG Policy Analysis: The network operator can specify EPG deployment information, EPG VLAN allocation and EPG attributes in the Controller(s) 116. Policy analysis can check each of these for completeness and reports of any configuration mismatches for all types of EPGs.

Bridge domain and Context Policy Analysis: Bridge Domain and Context model the L2 and L3 boundary in the network (e.g., Network Environment 100). The attribute of Bridge Domains and Contexts can be checked for correctness. For instance, every Bridge Domain needs to be part of a unique Context and every Context needs to have at least one valid Bridge Domain. If a Context has policy enforcement, appropriate contracts need to be defined between EPG pairs for data path communication.

Security Policy Analysis: Contracts in L_Model 270A can be parsed to detect if provider and consumer relations are specified. For every valid provider, there should at least be one valid associated consumer. Failing to match a provider with at least one consumer would leave the provider EPG dangling.

Semantic Analysis for Detecting Aliasing: Policy analysis can also do a semantic analysis of the L_Model 270A to detect contracts that have been aliased. For example, a higher priority rule that applies to a given EPG-pair (A, vzAny) can potentially mask a rule for an EPG-pair (A, B). Below are various types of aliasing checks that can be performed.

ALLOW_OVERSPECIFICATION: Here, a higher priority ALLOW rule fully overlaps with a lower priority ALLOW rule thus rendering the lower priority rule redundant.

ALLOW_CONTRADICTION: Here, a higher priority DENY rule fully overlaps with a lower priority ALLOW rule thus rendering the lower priority rule redundant.

DENY_OVERSPECIFICATION: Here, a higher priority DENY rule fully overlaps with a lower priority DENY rule thus rendering the lower priority rule redundant.

DENY_CONTRADICTION: Here, a higher priority ALLOW rule fully overlaps with a lower priority DENY rule thus rendering the lower priority rule redundant.

Aliased rules can potentially be deleted from the L_Model 270A to conserve hardware (e.g., TCAM) space in the Leafs 104.

In some cases, the policy analysis system can accept multiple models as the Input 600. For example, the Policy Analysis Generator 316 can accept an instance of L_Model 270A, LR_Model 270B, Li_Model 272, Ci_Model 274, and/or Hi_Model 276 as Input 600. Each model can also be interpreted as an n-input, m-output Boolean function, where n stands for the total number of bits across the input fields in the schema and m stands for the total number of bits across the output fields in the output schema. Non-limiting examples of input fields can include sg_label, sport, and dport, and non-limiting examples of output fields can include DENY, QOS, and PBR. The Boolean interpretation can assign actions (in the output fields) to each unique combination of inputs on the 2^n combinations of inputs.

The Policy Analysis Generator 316 can validate that for every input combination in the n-dimensional input space (n=147 for ACI/APIC), i.e., for each of 2^147 unique combinations, the models produce the same output across all action fields of interest at the outputs. The Policy Analysis Generator 316 can support various actions, such as allow, deny, allow-log, deny-log, etc., as well as vector (multi-bit) actions associated with the QoS and PBR fields. Depending on which models are used as Input 600, the check can be used to determine intent equivalence, realization equivalence, etc.

To perform such checks, the input specification can be converted into a specific representation and/or format. Canonicalization can allow effective checks of intent described in SDN constructs in terms of, for example, contracts, filters, etc., to other representations such as bit-streams of values and masks in hardware. The Policy Analysis Generator 316 can canonicalize models internally to perform a semantic equivalence check across the n-dimensional Boolean space for each action bit in the outputs.

The choice of data structures for the internal representation and canonicalization can be, for example, reduced ordered binary decision diagrams (ROBDDs). ROBDDs are efficient data structures that can incrementally, i.e., rule-by-rule or contract-by-contract build a monolithic representation for the two input models. ROBDDs are canonical data structures under reduction and ordering, and thus, if the two models are functionally/semantically equivalent, their ROBDD representations will converge to the same data structure internally to demonstrate equivalence of the models.

Based on the Input 600, the Policy Analysis Generator 316 can perform the lint and/or policy checks as previously mentioned, and generate an Output 602 which can include any lint or policy events, such as semantic issues, syntactic issues, etc.

In some cases, the Output 602 can be provided as a single Boolean output (equivalence/inequivalent) per action in the output fields, i.e., the Policy Analysis Generator 316 generates events that indicate equivalence/inequivalence between models across actions such as ALLOW, DENY, ALLOW-LOG, DENY-LOG, QoS, and PBR. The Output 602 can be generated as "events" for external consumption. Below are non-limiting examples of events.

ALLOW_TRAFFIC_MAYBE_BLOCKED- A contract with a subject/filter/filter_entry that has an action ALLOW is not fully enforced correctly due to potentially a stale rule that is conflicting in hardware (e.g., the TCAM) or if the rule was not pushed properly.

DENY_TRAFFIC_MAYBE_ALLOWED- A contract with a subject/filter/filter_entry that has an action DENY is not fully enforced correctly due to potentially a stale rule that is conflicting in hardware or if the rule was not pushed properly.

ALLOW_LOG_ACTION_VIOLATION- A contract with a subject/filter/filter_entry that has an action ALLOW, LOG is not fully enforced correctly due to potentially a stale rule that is conflicting in the TCAM or if the rule was not pushed properly.

DENY_LOG_ACTION_VIOLATION- A contract with a subject/filter/filter_entry that has an action DENY, LOG is not fully enforced correctly due to potentially a stale rule that is conflicting in the TCAM or if the rule was not pushed properly.

ENFORCED_VRF_POLICY_VIOLATION- This event can be generated if a given VRF is in ENFORCED state, but the default rules that were supposed to be programmed correctly have a violation (e.g., a rule(s) was not pushed properly or conflicts with some other stale rule).

UNENFORCED_VRF_POLICY_VIOLATION- This event can be generated if a given VRF is in UNENFORCED state, but the default rules that were supposed to be programmed correctly have a violation (e.g., a rule(s) was not pushed properly or conflicts with some other stale rule).

*_ENFORCED- For all the above events, a positive event can signal that the contract is correctly enforced in hardware (e.g., the TCAM). For example, ALLOW_TRAFFIC_POLICY_ENFORCED is signaling that a contract with an ALLOW action rule is correctly represented in the TCAM Hardware.

Events can be generated at the finest granularity (<Provider EPG, Consumer EPG, Contract, Subject, Filter, FilterEntry>) and/or aggregated (<Provider EPG, Consumer EPG>) to reduce event flood.

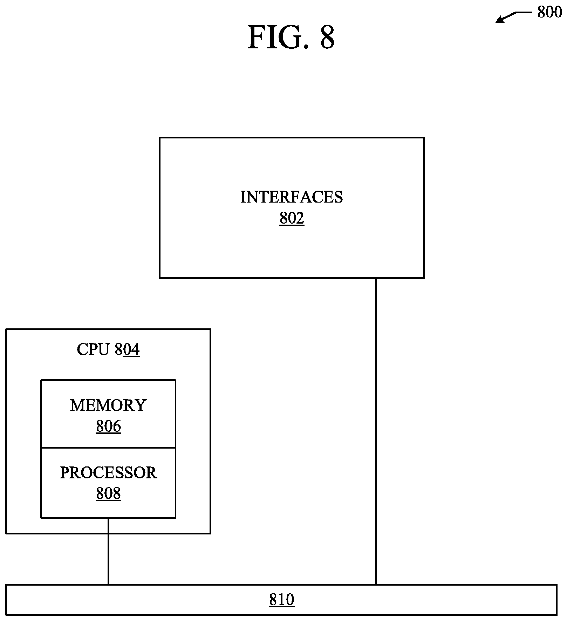

The disclosure now turns to FIGs. 7 and 8, which illustrate example computing and network devices, such as switches, routers, load balancers, client devices, and so forth.

FIG. 7 illustrates a computing system architecture 700 wherein the components of the system are in electrical communication with each other using a connection 705, such as a bus. Exemplary system 700 includes a processing unit (CPU or processor) 710 and a system connection 705 that couples various system components including the system memory 715, such as read only memory (ROM) 720 and random access memory (RAM) 725, to the processor 710. The system 700 can include a cache of high-speed memory connected directly with, in close proximity to, or integrated as part of the processor 710. The system 700 can copy data from the memory 715 and/or the storage device 730 to the cache 712 for quick access by the processor 710. In this way, the cache can provide a performance boost that avoids processor 710 delays while waiting for data. These and other modules can control or be configured to control the processor 710 to perform various actions. Other system memory 715 may be available for use as well. The memory 715 can include multiple different types of memory with different performance characteristics. The processor 710 can include any general purpose processor and a hardware or software service, such as service 1 732, service 2 734, and service 3 736 stored in storage device 730, configured to control the processor 710 as well as a special-purpose processor where software instructions are incorporated into the actual processor design. The processor 710 may be a completely self-contained computing system, containing multiple cores or processors, a bus, memory controller, cache, etc. A multi-core processor may be symmetric or asymmetric.

To enable user interaction with the computing device 700, an input device 745 can represent any number of input mechanisms, such as a microphone for speech, a touch-sensitive screen for gesture or graphical input, keyboard, mouse, motion input, speech and so forth. An output device 735 can also be one or more of a number of output mechanisms known to those of skill in the art. In some instances, multimodal systems can enable a user to provide multiple types of input to communicate with the computing device 700. The communications interface 740 can generally govern and manage the user input and system output. There is no restriction on operating on any particular hardware arrangement and therefore the basic features here may easily be substituted for improved hardware or firmware arrangements as they are developed.

Storage device 730 is a non-volatile memory and can be a hard disk or other types of computer readable media which can store data that are accessible by a computer, such as magnetic cassettes, flash memory cards, solid state memory devices, digital versatile disks, cartridges, random access memories (RAMs) 725, read only memory (ROM) 720, and hybrids thereof.

The storage device 730 can include services 732, 734, 736 for controlling the processor 710. Other hardware or software modules are contemplated. The storage device 730 can be connected to the system connection 705. In one aspect, a hardware module that performs a particular function can include the software component stored in a computer-readable medium in connection with the necessary hardware components, such as the processor 710, connection 705, output device 735, and so forth, to carry out the function.

FIG. 8 illustrates an example network device 800 suitable for performing switching, routing, load balancing, and other networking operations. Network device 800 includes a central processing unit (CPU) 804, interfaces 802, and a bus 810 (*e.g.,* a PCI bus). When acting under the control of appropriate software or firmware, the CPU 804 is responsible for executing packet management, error detection, and/or routing functions. The CPU 804 preferably accomplishes all these functions under the control of software including an operating system and any appropriate applications software. CPU 804 may include one or more processors 808, such as a processor from the INTEL X86 family of microprocessors. In some cases, processor 808 can be specially designed hardware for controlling the operations of network device 800. In some cases, a memory 806 (e.g., non-volatile RAM, ROM, etc.) also forms part of CPU 804. However, there are many different ways in which memory could be coupled to the system.

The interfaces 802 are typically provided as modular interface cards (sometimes referred to as "line cards"). Generally, they control the sending and receiving of data packets over the network and sometimes support other peripherals used with the network device 800. Among the interfaces that may be provided are Ethernet interfaces, frame relay interfaces, cable interfaces, DSL interfaces, token ring interfaces, and the like. In addition, various very high-speed interfaces may be provided such as fast token ring interfaces, wireless interfaces, Ethernet interfaces, Gigabit Ethernet interfaces, ATM interfaces, HSSI interfaces, POS interfaces, FDDI interfaces, WIFI interfaces, 3G/4G/5G cellular interfaces, CAN BUS, LoRA, and the like. Generally, these interfaces may include ports appropriate for communication with the appropriate media. In some cases, they may also include an independent processor and, in some instances, volatile RAM. The independent processors may control such communications intensive tasks as packet switching, media control, signal processing, crypto processing, and management. By providing separate processors for the communications intensive tasks, these interfaces allow the master microprocessor 604 to efficiently perform routing computations, network diagnostics, security functions, etc.

Although the system shown in FIG. 8 is one specific network device of the present invention, it is by no means the only network device architecture on which the present invention can be implemented. For example, an architecture having a single processor that handles communications as well as routing computations, etc., is often used. Further, other types of interfaces and media could also be used with the network device 800.

Regardless of the network device's configuration, it may employ one or more memories or memory modules (including memory 806) configured to store program instructions for the general-purpose network operations and mechanisms for roaming, route optimization and routing functions described herein. The program instructions may control the operation of an operating system and/or one or more applications, for example. The memory or memories may also be configured to store tables such as mobility binding, registration, and association tables, etc. Memory 806 could also hold various software containers and virtualized execution environments and data.

The network device 800 can also include an application-specific integrated circuit (ASIC), which can be configured to perform routing and/or switching operations. The ASIC can communicate with other components in the network device 800 via the bus 810, to exchange data and signals and coordinate various types of operations by the network device 800, such as routing, switching, and/or data storage operations, for example.

For clarity of explanation, in some instances the present technology may be presented as including individual functional blocks including functional blocks comprising devices, device components, steps or routines in a method embodied in software, or combinations of hardware and software.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

In summary, systems, methods, and computer-readable media for intent specification checks are described. In one example, a system obtains, from one or more controllers in a software-defined network, a logical model of the software-defined network, the logical model including configurations of one or more objects in a hierarchical management information tree that defines manageable objects and object properties for the software-defined network. Based on the hierarchical management information tree, the system performs a policy analysis of configurations in the logical model and determines, based on the policy analysis, whether the configurations in the logical model contain one or more errors.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, USB devices provided with non-volatile memory, networked storage devices, and so on.

Devices implementing methods according to these disclosures can comprise hardware, firmware and/or software, and can take any of a variety of form factors. Typical examples of such form factors include laptops, smart phones, small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

Claim language reciting "at least one of" refers to at least one of a set and indicates that one member of the set or multiple members of the set satisfy the claim. For example, claim language reciting "at least one of A and B" means A, B, or A and B.

## Claims

1. A method comprising:
obtaining, from one or more controllers (116) in a software-defined network (120), a logical model (270A, 366) of the software-defined network, the logical model comprising configurations of one or more objects in a hierarchical management information tree that defines manageable objects and object properties for the software-defined network;
based on the hierarchical management information tree, performing a policy analysis (360) of configurations in the logical model; and
based on the policy analysis, determining whether the configurations in the logical model contain one or more errors (370), wherein the one or more errors comprise an unused configuration of one or more objects or object properties, the unused configuration comprising a configuration that is defined in the logical model but not used.

2. The method of claim 1, wherein the one or more objects comprises a first set of objects associated with a first tenant configured in the logical model for the software-defined network and one or more second sets of objects associated with one or more second tenants configured in the logical model for the software-defined network.

3. The method of claim 2, wherein the configurations comprise a first set of configurations for the first set of objects associated with the first tenant and one or more second sets of configurations for the one or more second sets of objects associated with the one or more second tenants.

4. The method of any of the preceding claims, wherein the configurations in the logical model comprise at least one of endpoint group configurations, context configurations, bridge domain configurations, subnet configurations, and security policies, and wherein performing the policy analysis comprises at least one of performing a syntactic verification of the configurations and performing a semantic verification of the configurations.

5. The method of claim 4, wherein the security policies comprise at least one of contracts, filters, and entries, and wherein the endpoint group configurations comprise at least one of endpoint group deployment information, endpoint group virtual local area network allocation, and endpoint group attributes.

6. The method of claim 5, wherein the syntactic verification and the semantic verification comprise at least one of an endpoint group analysis, a bridge domain or context policy analysis, a security policy analysis, and a semantic analysis for detecting aliasing, wherein the endpoint group analysis comprises checking the endpoint group configurations for completeness or configuration mismatches, wherein the bridge domain or context policy analysis comprises checking context and bridge domain configurations for correctness, wherein the security policy analysis comprises checking for consumer endpoint group and provider endpoint group relationships defined in contracts, and wherein the semantic analysis for detecting aliasing comprises determining whether a first rule is rendered redundant by a second rule having a higher priority than the first rule.

7. The method of claim 6, wherein the manageable objects comprise at least one of tenant objects, context objects, endpoint groups, contracts, filters, application profiles, bridge domains, and network fabric access objects.

8. Apparatus comprising:
means for obtaining, from one or more controllers (116) in a software-defined network (120), a logical model (270A, 366) of the software-defined network, the logical model comprising configurations of one or more objects in a hierarchical management information tree that defines manageable objects and object properties for the software-defined network;
means for performing, based on the hierarchical management information tree, a policy analysis (360) of configurations in the logical model; and
means for determining, based on the policy analysis, whether the configurations in the logical model contain one or more errors (370), wherein the one or more errors comprise an unused configuration of one or more objects or object properties, the unused configuration comprising a configuration that is defined in the logical model but not used.

9. The apparatus according to claim 8 further comprising means for implementing the method according to any of claims 2 to 7.

10. A computer program, computer program product or computer readable medium comprising instructions which, when executed by a computer, cause the computer to carry out the steps of the method of any of claims 1 to 7.

## Patentansprüche

1. Verfahren, das Folgendes beinhaltet:
Einholen, von einer oder mehreren Steuerungen (116) in einem softwaredefinierten Netzwerk (120), eines logischen Modells (270A, 366) des softwaredefinierten Netzwerks, wobei das logische Modell Konfigurationen von einem oder mehreren Objekten in einem hierarchischen Managementinformationsbaum umfasst, der verwaltbare Objekte und Objekteigenschaften für das softwaredefinierte Netzwerk definiert;
Durchführen, auf der Basis des hierarchischen Managementinformationsbaums, einer Richtlinienanalyse (360) von Konfigurationen in dem logischen Modell; und
Feststellen, auf der Basis der Richtlinienanalyse, ob die Konfigurationen in dem logischen Modell einen oder mehrere Fehler (370) enthalten, wobei die ein oder mehreren Fehler eine unbenutzte Konfiguration von einem/r oder mehreren Objekten oder Objekteigenschaften umfassen, wobei die unbenutzte Konfiguration eine Konfiguration umfasst, die in dem logischen Modell definiert ist, aber nicht verwendet wird.

2. Verfahren nach Anspruch 1, wobei die ein oder mehreren Objekte einen ersten Satz von Objekten umfassen, die mit einem ersten Tenant (Kundenkonto) assoziiert sind, der in dem logischen Modell für das softwaredefinierte Netzwerk konfiguriert ist, und einen oder mehrere zweite Sätze von Objekten, die mit einem oder mehreren zweiten Tenants assoziiert sind, die in dem logischen Modell für das softwaredefinierte Netzwerk konfiguriert sind.

3. Verfahren nach Anspruch 2, wobei die Konfigurationen einen ersten Satz von Konfigurationen für den ersten Satz von mit dem ersten Tenant assoziierten Objekten und einen oder mehrere zweite Sätze von Konfigurationen für die ein oder mehreren zweiten Sätze von mit den ein oder mehreren zweiten Tenants assoziierten Objekten umfassen.

4. Verfahren nach einem der vorherigen Ansprüche, wobei die Konfigurationen in dem logischen Modell mindestens eines von Endpunktgruppenkonfigurationen, Kontextkonfigurationen, Brückendomänenkonfigurationen, Subnetzkonfigurationen und Sicherheitsrichtlinien umfassen, und wobei die Durchführung der Richtlinienanalyse mindestens eines von Durchführung einer syntaktischen Verifizierung der Konfigurationen und Durchführung einer semantischen Verifizierung der Konfigurationen umfasst.

5. Verfahren nach Anspruch 4, wobei die Sicherheitsrichtlinien mindestens eines von Verträgen, Filtern und Einträgen umfassen, und wobei die Endpunktgruppenkonfigurationen mindestens eines von Endpunktgruppeneinsatzinformationen, Endpunktgruppen-VLAN-(Virtual Local Area Network)-Zuweisung und Endpunktgruppenattributen umfassen.

6. Verfahren nach Anspruch 5, wobei die syntaktische Verifizierung und die semantische Verifizierung mindestens eines von einer Endpunktgruppenanalyse, einer Brückendomänen- oder Kontextrichtlinienanalyse, einer Sicherheitsrichtlinienanalyse und einer semantischen Analyse zum Erkennen von Aliasing beinhalten, wobei die Endpunktgruppenanalyse das Überprüfen der Endpunktgruppenkonfigurationen auf Vollständigkeit oder Konfigurationsfehlübereinstimmungen umfasst, wobei die Brückendomänen- oder Kontextrichtlinienanalyse das Überprüfen von Kontext- und Brückendomänenkonfigurationen auf Korrektheit umfasst, wobei die Sicherheitsrichtlinienanalyse das Überprüfen von in Verträgen definierten Beziehungen zwischen Verbraucher-Endpunktgruppen und Anbieter-Endpunktgruppen umfasst, und wobei die semantische Analyse zum Erkennen von Aliasing das Feststellen beinhaltet, ob eine erste Regel durch eine zweite Regel, die eine höhere Priorität als die erste Regel hat, redundant gemacht wird.

7. Verfahren nach Anspruch 6, wobei die verwaltbaren Objekte mindestens eines von Tenantobjekten, Kontextobjekten, Endpunktgruppen, Verträgen, Filtern, Anwendungsprofilen, Brückendomänen und Netzwerkstruktur-Zugangsobjekten umfassen.

8. Vorrichtung, die Folgendes umfasst:
Mittel zum Einholen, von einer oder mehreren Steuerungen (116) in einem softwaredefinierten Netzwerk (120), eines logischen Modells (270A, 366) des softwaredefinierten Netzwerks, wobei das logische Modell Konfigurationen von einem oder mehreren Objekten in einem hierarchischen Managementinformationsbaum umfasst, der verwaltbare Objekte und Objekteigenschaften für das softwaredefinierte Netzwerk definiert;
Mittel zum Durchführen, auf der Basis des hierarchischen Managementinformationsbaums, einer Richtlinienanalyse (360) von Konfigurationen in dem logischen Modell; und
Mittel zum Feststellen, auf der Basis der Richtlinienanalyse, ob die Konfigurationen in dem logischen Modell einen oder mehrere Fehler (370) enthalten, wobei die ein oder mehreren Fehler eine unbenutzte Konfiguration von einem/r oder mehreren Objekten oder Objekteigenschaften umfassen, wobei die unbenutzte Konfiguration eine Konfiguration umfasst, die in dem logischen Modell definiert ist, aber nicht verwendet wird.

9. Vorrichtung nach Anspruch 8, die ferner Mittel zur Durchführung des Verfahrens nach einem der Ansprüche 2 bis 7 umfasst.

10. Computerprogramm, Computerprogrammprodukt oder computerlesbares Medium mit Befehlen, die bei Ausführung durch einen Computer bewirken, dass der Computer die Schritte des Verfahrens nach einem der Ansprüche 1 bis 7 ausführt.

## Revendications

1. Procédé comprenant :
l'obtention, à partir d'un ou de plusieurs organes de commande (116) dans un réseau défini par logiciel (120), d'un modèle logique (270A, 366) du réseau défini par logiciel, le modèle logique comprenant des configurations d'un ou de plusieurs objets dans un arbre d'informations de gestion hiérarchique qui définit des objets et des propriétés d'objet gérables pour le réseau défini par logiciel ;
sur la base de l'arbre d'informations de gestion hiérarchique, la réalisation d'une analyse de politique (360) de configurations dans le modèle logique ; et
sur la base de l'analyse de politique, la détermination pour savoir si les configurations dans le modèle logique contiennent une ou plusieurs erreurs (370), les une ou plusieurs erreurs comprenant une configuration inutilisée d'un/e ou de plusieurs objets ou propriétés d'objets, la configuration inutilisée comprenant une configuration qui est définie dans le modèle logique mais n'est pas utilisée.

2. Procédé de la revendication 1, dans lequel les un ou plusieurs objets comprennent un premier ensemble d'objets associés à un premier locataire configuré dans le modèle logique pour le réseau défini par logiciel et un ou plusieurs deuxièmes ensembles d'objets associés à un ou plusieurs deuxièmes locataires configurés dans le modèle logique pour le réseau défini par logiciel.

3. Procédé de la revendication 2, dans lequel les configurations comprennent un premier ensemble de configurations pour le premier ensemble d'objets associés au premier locataire et un ou plusieurs deuxièmes ensembles de configurations pour les un ou plusieurs deuxièmes ensembles d'objets associés aux un ou plusieurs deuxièmes locataires.

4. Procédé de n'importe lesquelles des revendications précédentes, dans lequel les configurations dans le modèle logique comprennent au moins un élément parmi des configurations de groupe de point de terminaison, des configurations de contexte, des configurations de domaine de pontage, des configurations de sous-réseau, et des politiques de sécurité, et dans lequel la réalisation de l'analyse de politique comprend au moins une réalisation parmi la réalisation d'une vérification syntactique des configurations et la réalisation d'une vérification sémantique des configurations.

5. Procédé de la revendication 4, dans lequel les politiques de sécurité comprennent au moins un élément parmi des contrats, des filtres, et des entrées, et dans lequel les configurations de groupe de point de terminaison comprennent au moins un élément parmi des informations de déploiement de groupe de point de terminaison, une attribution de réseau local virtuel du groupe de point de terminaison, et des attributs du groupe de point de terminaison.

6. Procédé de la revendication 5, dans lequel la vérification syntactique et la vérification sémantique comprennent au moins une analyse parmi une analyse de groupe de point de terminaison, une analyse de domaine de pontage ou de politique de contexte, une analyse de politique de sécurité, et une analyse sémantique pour détecter une pseudonymisation, dans lequel l'analyse de groupe de point de terminaison comprend le contrôle des configurations de groupe de point de terminaison pour leur intégralité ou des discordances de configuration, dans lequel l'analyse du domaine de pontage ou de la politique de contexte comprend le contrôle des configurations de domaine de pontage et de contexte pour leur exactitude, dans lequel l'analyse de la politique de sécurité comprend le contrôle pour des relations entre un groupe de point de terminaison consommateur et un groupe de point de terminaison fournisseur définies dans des contrats, et dans lequel l'analyse sémantique pour la détection de pseudonymisation comprend la détermination pour savoir si une première règle est rendue redondante par une deuxième règle ayant une priorité plus élevée que la première règle.

7. Procédé de la revendication 6, dans lequel les objets gérables comprennent au moins un élément parmi des objets locataires, des objets de contexte, des groupes de point de terminaison, des contrats, des filtres, des profils d'application, des domaines de pontage, et des objets d'accès au tissu de réseau.

8. Appareil comprenant :
un moyen pour obtenir, à partir d'un ou de plusieurs organes de commande (116) dans un réseau défini par logiciel (120), un modèle logique (270A, 366) du réseau défini par logiciel, le modèle logique comprenant des configurations d'un ou de plusieurs objets dans un arbre d'informations de gestion hiérarchique qui définit des objets et des propriétés d'objet gérables pour le réseau défini par logiciel ;
un moyen pour réaliser, sur la base de l'arbre d'informations de gestion hiérarchique, une analyse de politique (360) de configurations dans le modèle logique ; et
un moyen pour déterminer, sur la base de l'analyse de politique, si les configurations dans le modèle logique contiennent une ou plusieurs erreurs (370), les une ou plusieurs erreurs comprenant une configuration inutilisée d'un/e ou de plusieurs objets ou propriétés d'objets, la configuration inutilisée comprenant une configuration qui est définie dans le modèle logique mais n'est pas utilisée.

9. Appareil selon la revendication 8 comprenant en outre un moyen pour mettre en œuvre le procédé selon n'importe lesquelles des revendications 2 à 7.

10. Programme informatique, produit à programme informatique ou support lisible par ordinateur comprenant des instructions qui, lorsqu'elles sont exécutées par un ordinateur, amènent l'ordinateur à effectuer les étapes du procédé de n'importe lesquelles des revendications 1 à 7.
